(19) Europäisches Patentamt
European Patent Office
Office européen des brevets

(11) **EP 1 372 049 A1**

(12) **DEMANDE DE BREVET EUROPEEN**

(43) Date de publication:
**17.12.2003 Bulletin 2003/51**

(51) Int Cl.$^7$: **G05B 13/02**

(21) Numéro de dépôt: **03012681.7**

(22) Date de dépôt: **04.06.2003**

| | |
|---|---|
| (84) Etats contractants désignés:<br>**AT BE BG CH CY CZ DE DK EE ES FI FR GB GR HU IE IT LI LU MC NL PT RO SE SI SK TR**<br>Etats d'extension désignés:<br>**AL LT LV MK** | • **Michelin Recherche et Technique S.A.**<br>**1763 Granges-Paccot (CH)** |
| (30) Priorité: **13.06.2002 FR 0207399**<br>**29.07.2002 FR 0209629** | (72) Inventeurs:<br>• **Levy, Georges MICHELIN RECHERCH ASIA**<br>**Chiyoda-Ku (JP)**<br>• **Fangeat, Nicolas**<br>**63400 Chamalieres (FR)** |
| (71) Demandeurs:<br>• **Société de Technologie Michelin**<br>**63000 Clermont-Ferrand (FR)** | (74) Mandataire: **Bauvir, Jacques**<br>**M.F.P. Michelin,**<br>**SGD/LG/PI-F35-Ladoux**<br>**63040 Clermont-Ferrand Cedex 09 (FR)** |

(54) **Méthode d'asservissement, utilisable notamment pour maintenir le glissement d'un pneu à un niveau optimal pour qu'il fonctionne à un niveau de coefficient d'adhérence maximal**

(57) Méthode d'asservissement pour un phénomène dont un paramètre Y varie en fonction d'un paramètre X selon une loi présentant une croissance, un extremum et une décroissance, dans laquelle on asservit la valeur du paramètre X pour maintenir la valeur d'un paramètre Y à une valeur optimale, comprenant les étapes suivantes :

• Déterminer des estimations ou des mesures $(X_i, Y_i)$ pour au moins une paire de valeurs ;
• Déterminer les valeurs correspondantes de la pente $\alpha_i$, de la droite passant par l'origine et par $(X_i, Y_i)$ ;
• Calculer des coefficients $A_p$ par calcul direct ou par une régression à partir d'un nombre suffisant de paires avec $(\alpha_i, X_i)$ de façon à modéliser une courbe de variation $\alpha_i = f(X_i, A_p)$ ;
• Calculer une valeur cible $X_{max}$ en utilisant un Invariant "Invt" prédéterminé.

Application aux tests et au fonctionnement du pneumatique sur véhicule, par exemple pour contrôler l'adhérence en freinage, avec Y étant coefficient d'adhérence et X étant le glissement du pneumatique sous couple.

Fig. 1

EP 1 372 049 A1

**Description**

La présente invention se rapporte aux asservissements permettant de maintenir certains systèmes autour d'un point de fonctionnement particulier. Dans une application privilégiée, l'invention concerne les méthodes de test des pneumatiques. Dans une autre application privilégiée, l'invention concerne les systèmes de pilotage de stabilité d'un véhicule, plus particulièrement dans leur fonction visant à éviter le blocage des roues lors de freinages appuyés, popularisée sous la désignation « ABS », mais également dans leurs variantes plus sophistiquées visant à maintenir le véhicule sur une trajectoire stable en agissant automatiquement sur les freins d'une roue, comme par exemple sur les systèmes popularisés sous la désignation « ESP », ou en agissant sur tout autre actionneur (quatre roues directrices, antiroulis actif,...).

On sait que le freinage d'un véhicule sera d'autant plus efficace que l'on parviendra à faire fonctionner la bande de roulement à un glissement G correspondant à la valeur maximale du coefficient d'adhérence (parfois aussi appelé coefficient de frottement). On appelle $\mu_{max}$ la valeur maximale du coefficient d'adhérence. Mais le conducteur moyen n'est pas capable de doser le freinage de façon à satisfaire à cette condition.

Les premiers systèmes de freinage dits « ABS» modulaient automatiquement la force de freinage (en fait, l'actionneur de freinage étant à l'heure actuelle en général un vérin hydraulique, un système ABS module la pression hydraulique) de façon à faire osciller le fonctionnement du pneu autour du maximum d'adhérence. Cela implique de dépasser le maximum d'adhérence pour pouvoir le détecter par l'amorce du blocage de la roue (décélération brutale de la rotation de la roue), avant de réduire la force de freinage pour revenir juste en dessous du maximum d'adhérence. La force de freinage est ensuite à nouveau automatiquement augmentée jusqu'à dépasser le maximum d'adhérence, puis réduite, et ainsi de suite.

Néanmoins, cette méthode implique de dépasser fugitivement le glissement $G_{max}$ correspondant à la valeur maximale du coefficient d'adhérence $\mu_{max}$, alors que l'idéal serait d'approcher la cible de glissement par défaut sans jamais le dépasser. Il importe de noter que l'on appelle $G_{max}$, par convention de langage, non pas une valeur maximale possible du glissement mais le glissement auquel le coefficient d'adhérence est à sa valeur maximale possible.

L'efficacité du freinage dépend de la finesse des variations de glissement autour du glissement correspondant au coefficient d'adhérence maximal. Lorsque l'on évoque l'efficacité, on ne s'intéresse ici qu'à l'importance de la décélération, en mettant de côté l'intérêt majeur des systèmes ABS d'offrir au conducteur du véhicule une certaine capacité de faire virer celui-ci lors d'un freinage d'urgence. Dès lors, dans le contexte de la présente invention, un freinage est considéré comme d'autant plus efficace que la distance de freinage est courte. L'efficacité d'un tel freinage est dégradée par les périodes pendant lesquelles on ne freine pas au niveau du coefficient d'adhérence maximale, c'est à dire pendant les périodes de glissement trop important et pendant les périodes de glissement insuffisant.

Les premiers systèmes de freinage dits « ABS », dont le fonctionnement a été évoqué ci-dessus, avaient l'avantage de s'adapter automatiquement aux différents pneumatiques. Cette caractéristique est importante car on sait par exemple que le glissement d'un pneu hiver au maximum du coefficient d'adhérence est considérablement plus important que le glissement d'un pneu été au maximum du coefficient d'adhérence, de même que l'on sait que le glissement d'un pneu neuf au maximum du coefficient d'adhérence est plus important que le glissement d'un pneu usé au maximum du coefficient d'adhérence. Malheureusement, les vibrations engendrées par ce type d'asservissement sont désagréables et peuvent même avoir pour effet que le conducteur relâche l'appui sur la pédale de frein. Cette génération de système de freinage est illustrée par exemple par le brevet US 3,980,346 où on décrit une amélioration d'un tel système.

Ce système permet de s'adapter à différents pneus. Pour cela, la pression est augmentée par paliers. On observe alors l'évolution de la vitesse de rotation de la roue, on en déduit alors s'il faut augmenter la pression ou la diminuer ; cet asservissement est "adaptatif" mais génère bien évidemment des vibrations.

Actuellement, des systèmes de contrôle de la stabilité d'un véhicule modulent automatiquement la force de freinage de façon à viser une cible de glissement prédéterminée, censée correspondre au maximum du coefficient d'adhérence.

Dans ce cas de figure, un système de freinage d'un véhicule vise donc à maintenir un effort de freinage tel que la bande de roulement fonctionne au niveau de glissement optimal choisi. Un tel système mesure continûment la vitesse de rotation de chacune des roues $V_{pneu}$. Avec un algorithme spécifique (voir par exemple le brevet US 5,402,345), on dispose d'une estimation de la vitesse du véhicule $V_{véhicule}$. On a donc une estimation du glissement $G = 1-V_{Pneu}/V_{Véhicule}$ instantané. Idéalement, tant que ce glissement estimé reste inférieur au glissement optimal, la force de freinage ne doit pas être écrêtée, ou même peut être augmentée automatiquement en cas d'activation d'une fonction d'amplification automatique de freinage (voir par exemple le brevet US 5,816,666). Lorsque l'effort de freinage le plus important possible est atteint, la pression de freinage est régulée de façon à maintenir un glissement optimal $G_{max}$, c'est à dire le glissement correspondant au coefficient d'adhérence maximum ($\mu_{max}$).

Reste à déterminer le glissement optimal. Dans la demande de brevet EP 0503025, cela se fait à partir d'une courbe de référence donnant une valeur de G à viser en fonction du coefficient d'adhérence estimé $\mu$ et de la vitesse du véhicule également estimée. On procède à une estimation du coefficient d'adhérence $\mu$ comme suit. Lors d'un freinage ligne droite sur un sol homogène, la force de freinage $F_X$ du pneu au sol est déterminée à partir de la pression de freinage et des paramètres de construction de la roue et de son frein. La connaissance de l'ensemble des forces $F_X$ appliquées par tous les pneus permet de calculer la décélération du véhicule, donc compte tenu des caractéristiques du véhicule le transfert de charge, donc les variations de charges sur chacune des roues. On peut en déduire une approximation de la charge verticale $F_Z$ appliquée sur chaque pneumatique. On obtient ainsi une estimation du coefficient d'adhérence $\mu = \dfrac{F_X}{F_Z}$. Si l'on connaît, par une estimation ou une mesure, l'effort latéral correspondant $F_y$, une estimation plus précise du coefficient d'adhérence est donnée par la formule

$$\mu = \frac{\sqrt{F_X^2 + F_Y^2}}{F_Z}.$$

Dans le contexte de la présente invention, on considérera ces deux estimations comme équivalentes. De même et ceci est bien clair pour l'homme du métier, dans le contexte de la présente invention, tout ce qui est exposé à propos du freinage reste valable en cas d'accélération ; autrement dit, un effort freineur est, quant au considérations relatives à l'adhérence, équivalent à un effort moteur, même si bien entendu, les actuateurs pour modifier ceux-ci ne sont pas les mêmes.

Par ailleurs, en se reportant à ladite courbe de référence, on vérifie quel serait le coefficient d'adhérence $\mu$ de référence pour le glissement G estimé. Tant que le glissement actuel estimé est inférieur au glissement cible, on augmente le glissement jusqu'à ce que les valeurs de glissement coïncident sensiblement. Un avantage de ce deuxième système est d'avoir moins d'oscillations autour du glissement maximum qu'avec le premier.

Malheureusement, cette courbe de référence est prédéterminée expérimentalement, donc pour un nombre limité de pneumatiques et ne peut tenir aucun compte de l'état réel de l'équipement en pneumatiques du véhicule, pas plus que de ces conditions d'utilisation, par exemple pression de gonflage, niveau d'usure, etc. Si ce principe d'asservissement permet effectivement de limiter ou de supprimer les vibrations, l'efficacité du freinage est d'autant plus dégradée que le pneu réellement utilisé requière intrinsèquement un glissement au maximum du coefficient d'adhérence très différent de celui programmé en fait dans la courbe de référence.

L'objectif de la présente invention est de s'affranchir des inconvénients évoqués ci-dessus, en proposant un principe d'asservissement, applicable par exemple au glissement d'un pneumatique, qui soit tout à la fois auto adaptatif, comme la première méthode connue expliquée brièvement ci-dessus, et qui vise plus positivement, avec moins d'oscillations, comme la deuxième méthode, un glissement optimal, c'est à dire sans devoir dépasser la limite d'adhérence.

Un but de la présente invention est de prédire le glissement associé au coefficient d'adhérence maximal $\mu_{max}$ en cours de freinage (ou d'effort moteur), en fonction des conditions réelles de roulage du pneumatique considéré, et ceci au moyen de mesures aussi simples que possible à acquérir sur banc de mesure ou sur véhicule, et au moyen d'un nombre de mesures aussi faible que possible.

La présente invention est basée sur les observations détaillées ci-dessous, permettant d'identifier l'existence d'un Invariant, c'est à dire d'un paramètre ayant une valeur constante et indépendante tout à la fois des pneumatiques et des sols sur lesquels ils sont utilisés.

De façon générale, l'invention se rapporte à une méthode de régulation applicable à tout phénomène présentant des caractéristiques exposées ci-dessous. L'invention propose une méthode d'asservissement pour un phénomène dont un paramètre Y varie en fonction d'un paramètre X selon une loi présentant une croissance, un extremum et une décroissance, dans laquelle on asservit la valeur du paramètre X pour maintenir la valeur d'un paramètre Y à une valeur optimale, comprenant les étapes suivantes :

- Déterminer des estimations ou des mesures $(X_i, Y_i)$ pour au moins une paire « i » de valeurs ;
- Déterminer les valeurs correspondantes de la pente $\alpha_i$, de la droite passant par l'origine et par $(X_i, Y_i)$ ;
- Calculer des coefficients $A_p$ par calcul direct ou par une régression à partir d'un nombre suffisant de paires avec $(\alpha_i, X_i)$ de façon à modéliser une courbe de variation $\alpha_i = f(X_i, A_p)$ ;
- Calculer une valeur cible $X_{max}$ en utilisant un Invariant "Invt" prédéterminé.

Le calcul de la valeur cible $X_{max}$ se fait par la formule de modélisation résultant du choix de calcul direct ou de régression. On s'intéresse plus particulièrement ci-dessous au domaine de la liaison au sol des véhicules routiers, et aux éléments ou systèmes qu'elle comporte.

L'invention propose un système de liaison au sol dans lequel un paramètre caractéristique Q du fonctionnement d'un pneumatique sur un véhicule en mouvement varie en fonction d'un paramètre P selon une loi présentant une croissance, un extremum et une décroissance, la valeur dudit paramètre P étant imposée par un contrôleur de manière directe ou indirecte, agissant sur au moins l'un des éléments choisis dans le groupe comportant le couple de rotation appliqué au pneumatique, l'angle de braquage du pneumatique, l'angle de carrossage du pneumatique et la force verticale appliquée au pneumatique pour maintenir la valeur d'un paramètre Q à une valeur choisie, dans lequel le contrôleur comporte des moyens pour :

- Déterminer des estimations ou des mesures $(P_i, Q_i)$ pour au moins une paire « i » de valeurs ;
- Déterminer les valeurs correspondantes de la pente $\beta_i$, de la droite passant par l'origine et par $(P_i, Q_i)$ ;
- Calculer des coefficients $A_p$ par calcul direct ou par une régression à partir d'un nombre suffisant de paires avec $(\beta_i, P_i)$ de façon à modéliser une courbe de variation $\beta_i = f(P_i, A_p)$ ;
- Calculer une valeur cible $P^{Cible}$ en utilisant un Invariant "Invt" prédéterminé ;
- Passer en mode « actif » lorsque la différence entre $P^{Instantané}$ et $P^{Cible}$ est supérieure en valeur absolue à un seuil prédéterminé.

Bien entendu, comme cela est courant dans les systèmes asservis, tout particulièrement dans les systèmes de sécurité comportant un asservissement, l'utilisation de l'invention n'exclut pas que le contrôleur puisse comporter d'autres moyens que ceux décrits ci-dessus, notamment d'autres moyens pour calculer une valeur cible du paramètre P, par exemple pour réaliser un système redondant et/ou pour utiliser des stratégies alternatives qui pourraient être jugées préférables dans certains cas de figures au vu des estimations ou des mesures obtenues pour les paires de paramètres $(P_i, Q_i)$.

Lorsque le contrôleur bascule en mode actif, il envoie une alarme et/ou il agit sur le paramètre P de façon à en maintenir la valeur à $p^{Cible}$, et/ou il agit sur tout autre paramètre approprié.

Une première application du concept de l'invention se rapporte aux tests des pneus, ou des sols. Il est possible, en procédant à quelques mesures dans le domaine où la courbe de variation du coefficient d'adhérence $\mu$ en fonction du glissement G est croissante, en se tenant loin du maximum, d'estimer de façon fiable un glissement optimal $G^{Opt}$, en particulier le glissement $G_{max}$ correspondant au coefficient d'adhérence maximum $(\mu_{max})$.

L'invention propose une méthode de contrôle du fonctionnement d'un pneumatique comprenant les étapes suivantes :

- Déterminer des estimations ou des mesures $(G_i, \mu_i)$ pour au moins une paire « i » de valeurs ;
- Déterminer les valeurs correspondantes de la pente $\alpha_i$, de la droite passant par l'origine et par $(G_i, \mu_i)$ ;
- Calculer des coefficients $A_p$ par calcul direct ou par une régression à partir d'un nombre suffisant de paires avec $(\alpha_i, G_i)$ de façon à modéliser une courbe de variation $\alpha_i = f(G_i, A_p)$.

Le coefficient d'adhérence peut, dans la présente invention, être estimé comme indiqué ci-dessus, ou bien entendu de toute autre manière, par exemple à partir de mesures faites dans le pneumatique ou son environnement. On obtient ainsi une modélisation (courbe de variation évoquée ci-dessus) du fonctionnement en glissement du pneumatique, dont les applications peuvent être diverses. La suite décrit une application privilégiée, mais non limitative, relative au contrôle du glissement à un niveau optimal prédéterminé, en particulier par exemple au contrôle du glissement correspondant à l'adhérence maximale du pneu, applicable comme déjà souligné aussi bien aux situations où l'effort longitudinal transmis par le pneu est un effort freineur, qu'aux situations où l'effort longitudinal transmis par le pneu est un effort moteur.

Avantageusement, on détermine une estimation du glissement optimal $G^{Opt}$ par la formule. résultant du choix de calcul direct ou de la régression choisie, en utilisant un Invariant "Invt" prédéterminé. Et dans ce cas, le calcul de la valeur cible $G^{Opt}$ se fait, en transposant la présentation générale faite ci-dessus, par la formule de modélisation résultant du choix de calcul direct ou de régression.

L'invention propose aussi des méthodes de test de pneumatique qui seront explicitées ci-dessous.

Notons que, dans le contexte de la présente invention, peu importe que la bande de roulement dont on traite la caractéristique d'adhérence soit celle d'un pneumatique ou d'un bandage élastique non pneumatique ou encore d'une chenille. Les termes « bande de roulement », « pneu » ou « pneumatique », « bandage », « bandage élastique », « chenille » ou même « roue» doivent être interprétés comme équivalents.

Dans une autre application privilégiée, l'invention se rapporte à l'analyse de la poussée de dérive développée par un pneumatique ou bandage élastique dans une zone de fonctionnement proche de la saturation de la poussée de dérive.

L'invention propose également une méthode visant à prédire la valeur de l'angle de dérive $\delta$ d'un pneumatique où la force latérale (dite aussi « poussée de dérive ») est maximale. Il s'agit de prévoir quand le pneu atteindra son maximum et donc ne sera plus capable de répondre à sa fonction première qui est de permettre au véhicule de tourner, afin de pouvoir maintenir le fonctionnement du pneumatique à une valeur cible prédéterminée de la poussée de dérive $F_{cible}$, ou pour prévenir le conducteur. Pour maintenir le fonctionnement du pneumatique à une valeur cible prédéterminée, on peut procéder, éventuellement automatiquement, à des interventions préventives de réduction de la vitesse du véhicule pour éviter des situations de conduite critiques (si le véhicule ne tourne pas comme le souhaite le conducteur, il peut en résulter un accident). La méthode de contrôle du fonctionnement d'un pneumatique proposée par l'invention, comportant une phase de prédiction de la valeur de l'angle de dérive $\delta$ d'un pneumatique où la force latérale est maximale, comprend les étapes suivantes :

- Déterminer des estimations $(\delta_i, F_i)$ pour au moins une paire « i » de valeurs ;
- Déterminer les valeurs correspondantes de la pente $\alpha_i$, de la droite passant par l'origine et par $(\delta_i, F_i)$ ;
- Calculer des coefficients $A_p$ par calcul direct ou par une régression à partir d'un nombre suffisant de paires avec $(\alpha_i, \delta_i)$ de façon à modéliser une courbe de variation $\alpha_i = f(\delta_i, A_p)$ ;

On obtient ainsi une modélisation (courbe de variation évoquée ci-dessus) du fonctionnement en dérive du pneumatique, dont les applications peuvent être diverses. La suite décrit une application privilégiée, mais non limitative, relative au contrôle de l'angle de dérive de façon à bien exploiter le potentiel de poussée de dérive du pneumatique. Dans ce cas, la méthode comprend en outre les étapes suivantes :

- Calculer une valeur de l'angle de dérive $\delta^{Opt}$ en utilisant un Invariant "Invt" prédéterminé ;
- Etablir un signal d'alerte quand l'angle de dérive $\delta$ est proche de $\delta^{Opt}$.

Outre les méthodes de test des pneumatiques, l'invention concerne également les systèmes de pilotage de stabilité d'un véhicule. Cela concerne tout à la fois la fonction visant à éviter le blocage des roues lors de freinages appuyés, popularisée sous la désignation « ABS », ou encore visant à augmenter automatiquement la force de freinage jusqu'à la limite physiquement possible, et cela concerne aussi des variantes plus sophistiquées de système de pilotage de stabilité d'un véhicule visant à maintenir le véhicule sur une trajectoire stable en agissant automatiquement et sélectivement sur les freins d'une roue et/ou en agissant automatiquement sur le braquage de roues directrices ou sur tout autre actionneur permettant d'influencer le comportement du véhicule.

L'invention va être expliquée plus en détails dans la suite, à consulter avec les figures jointes dans lesquelles :

- la figure 1 est un bloc-diagramme représentant le procédé d'asservissement selon l'invention,
- la figure 2 est une courbe de variation du coefficient d'adhérence par rapport au glissement et la variation au même glissement de la sécante passant par l'origine et le point de la courbe précédente au même glissement,
- la figure 3 est une courbe de variation de la poussée de dérive par rapport à l'angle de dérive et la variation au même angle de dérive de la sécante passant par l'origine et le point de la courbe précédente au même angle de dérive,
- la figure 4 donne plusieurs relevés de variation du coefficient d'adhérence par rapport au glissement pour un même pneu dans différentes conditions d'essai,
- la figure 5 donne la position des coefficients d'adhérence $\mu_{max}$ et des glissements associés $G_{max}$ pour de nombreux pneus et conditions d'essais différentes,
- la figure 6 donne une courbe schématique typique de variation du coefficient d'adhérence par rapport au glissement, sur laquelle on a repéré deux points particuliers : le coefficient d'adhérence $\mu_{max}$ et son glissement associé $G_{max}$, et le point conventionnel correspondant au coefficient d'adhérence $\mu_{50\%}$ prévalant à 50% du glissement $G_{max}$, repéré conventionnellement par $G_{max/2}$,
- la figure 7 donne la position des points correspondant, en ordonnées, au quotient $\mu/G$ (à $G_{max}$) du coefficient d'adhérence $\mu_{max}$ par le glissement associé au coefficient d'adhérence $\mu_{max}$ et des quotients $\mu/G$ (à 50% de $G_{max}$) de la valeur du coefficient d'adhérence au et par le glissement valant 50% du glissement associé au coefficient d'adhérence $\mu_{max}$, et ceci pour de nombreux pneus et conditions d'essais différentes,
- la figure 8 donne une courbe schématique typique de variation du coefficient d'adhérence par rapport au glissement et montre l'allure des sécantes passant par l'origine et la courbe pour trois glissements particuliers,
- la figure 9 donne une courbe schématique typique de variation linéaire en fonction du glissement de la pente de la sécante passant par l'origine et le point de la courbe de variation du coefficient d'adhérence au même glissement,
- la figure 10 donne une courbe d'application généralisée à un phénomène de variation de Y par rapport à X, présentant un maximum de Y pour un X particulier, et une croissance monotone au maximum de Y,
- la figure 11 donne une courbe d'application généralisée à autre phénomène de variation fondamentalement semblable au précédent.

La présente invention est basée sur les observations suivantes.

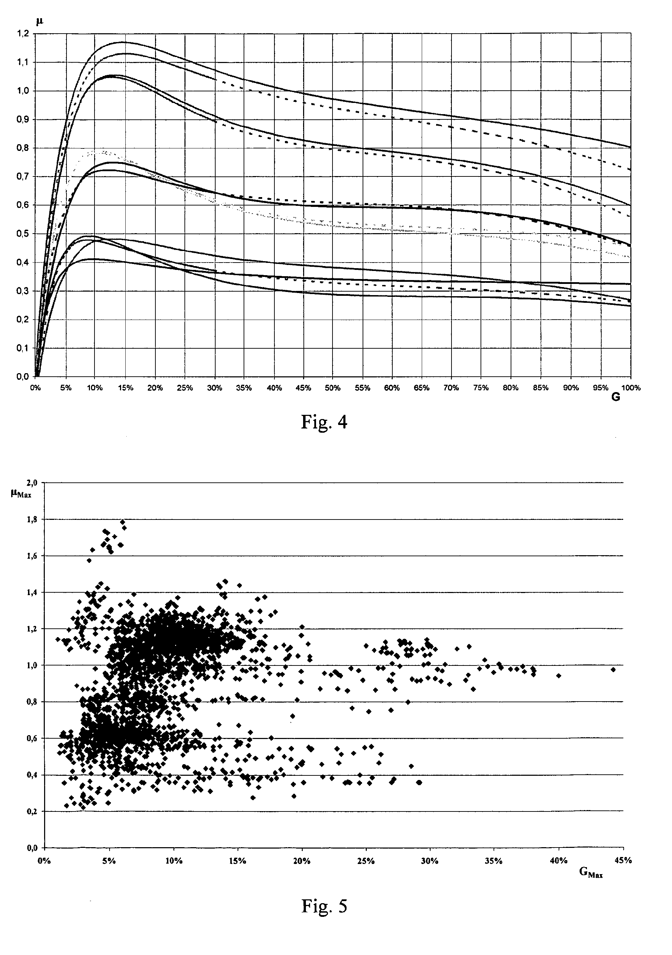

La figure 4 donne différentes courbes de coefficient d'adhérence $\mu$ en fonction du glissement pour un même pneumatique MICHELIN XH1 195/65-15 testé sur différents sols à une pression de gonflage de 2 bars. La figure 5 donne le lieu des coefficients d'adhérence $\mu_{max}$ et le glissement correspondant, pour un très grand nombre d'essais correspondant à des pneus différents, des sols différents et des conditions d'essais différentes par la vitesse, la charge du pneumatique, .... On voit qu'il est difficile, sinon illusoire de trouver une régression permettant d'appréhender correctement les phénomènes physiques d'adhérence par une telle approche car il y a une grande dispersion des valeurs.

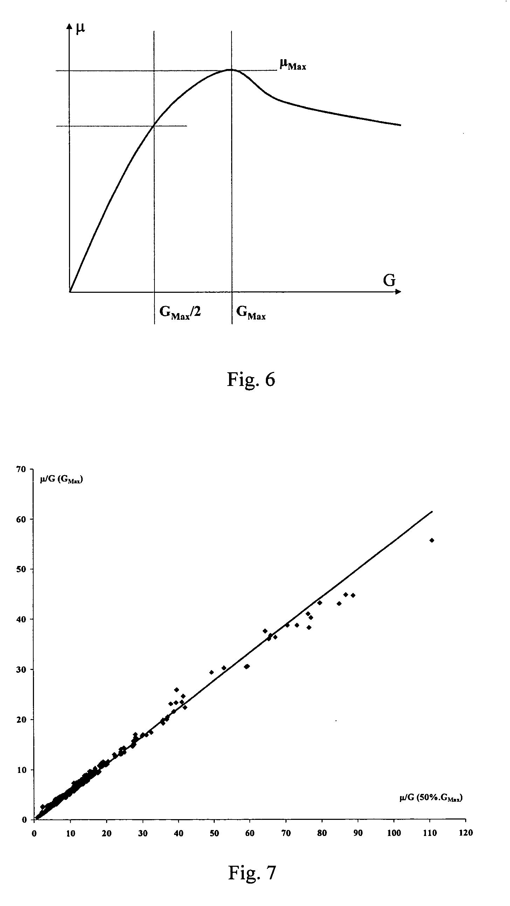

La demanderesse a donc poursuivi ses investigations comme on va l'expliquer. On procède à l'analyse du quotient $\mu/G$ calculé pour $G=G_{max}$ et pour $G=G_{max}/2$, également noté "50%" (voir figure 6).

La figure 7 montre les valeurs du rapport $\mu_{max}/G_{max}$ en fonction du rapport $\mu/G$ à 50% de max pour environ 400 essais, soit un total de 3000 mesures environ avant de déterminer une valeur moyenne. La figure 7 reflète de multiples conditions de sol et de pneumatiques différents, et conditions de tests (Charge, vitesse, pression) elles-mêmes variables. Elle permet de se rendre compte de l'excellente vérification expérimentale de l'Invariant « Invt » présenté ci-dessus.

On observe que, quels que soient les pneumatiques considérés et les conditions de test :

$$\frac{\frac{\mu}{G}(G = G_{max})}{\frac{\mu}{G}(G = G_{max}/2)} \approx 0.58 \qquad ①$$

Le rapport ci-dessus est un Invariant noté "Invt" par la suite.

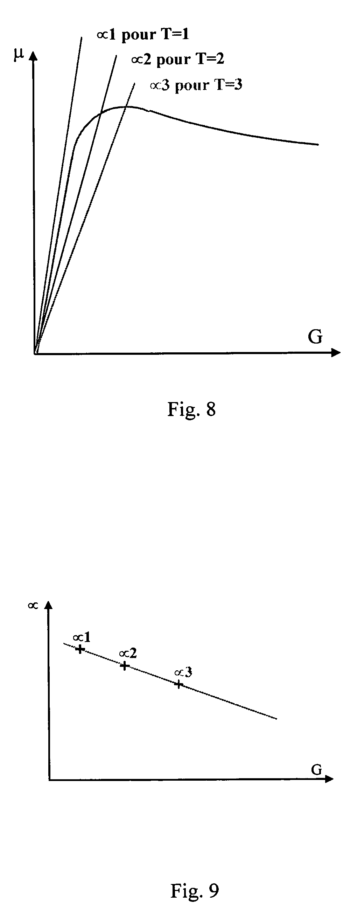

On s'intéresse ensuite à la pente moyenne de la courbe $\mu(G)$ (voir figure 8). Convenons d'appeler $\alpha$ cette pente. On a :

$$\mu = \alpha \cdot G$$

On fait l'hypothèse que cette pente varie linéairement avec G (ce qui est une bonne approximation au moins dans la première partie de la courbe). On peut donc calculer l'équation de la droite $\alpha(G)$ (dans l'hypothèse d'une variation linéaire, voir figure 9) :

$$\alpha = a \cdot G + b \qquad\qquad (2)$$

Grâce à cette équation et à l'Invariant "Invt" décrit dans la partie précédente, on peut écrire :

$$a \cdot G_{max} + b = Invt \cdot \left( a \cdot \frac{G_{max}}{2} + b \right)$$

On en déduit ainsi le $G_{max}$ qui est la cible à viser par un contrôleur de système de freinage d'un véhicule, selon l'invention :

$$G_{max} = -\frac{b}{a} \cdot \frac{1 - Invt}{1 - \frac{Invt}{2}}$$

Le principe permettant de calculer $G_{max}$ (plus exactement le glissement effectif lorsque la bande de roulement fonctionne au coefficient d'adhérence ($\mu_{max}$) permet de déterminer la valeur de la cible de G quel que soit le type de pneu, quel que soit son degré d'usure, de vieillissement, et quelles que soient les conditions d'utilisation du pneu.

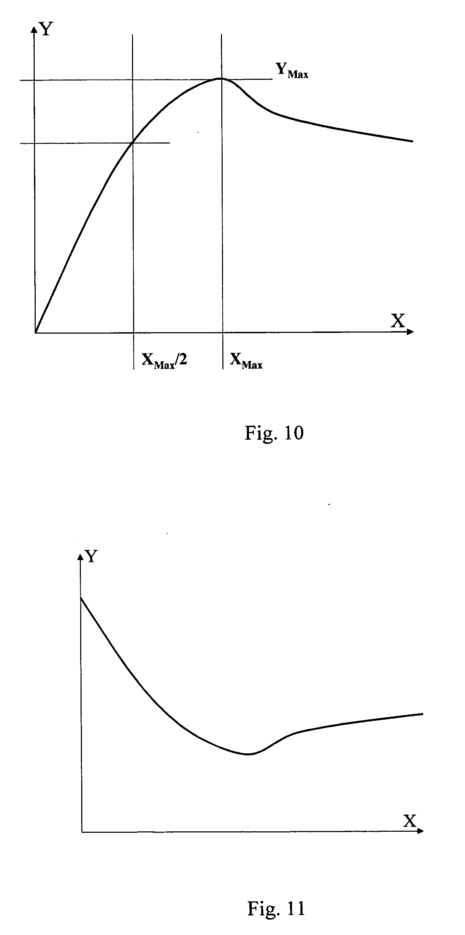

Les observations ci-dessus étant basées sur les courbes de variation du coefficient d'adhérence en fonction du glissement, elles restent valables pour tout phénomène de variation d'un paramètre en fonction d'un autre, pourvu qu'il présente une courbe caractéristique semblable. L'invention propose donc un procédé d'asservissement valable pour un paramètre X lorsqu'il existe un paramètre Y tel que la courbe de Y(X) a une allure donnée à la figure 10, ou pour tout phénomène de variation qui présente une telle courbe après des transformations simples, comme une translation, une homothétie, un retournement et toute combinaison de ces mêmes transformations (voir figure 11 illustrant la combinaison d'une translation et d'un retournement à effectuer avant de retrouver la même allure de courbe que celle de la figure 10).

En outre, bien que l'équation (2) ci-dessus montre qu'une régression linéaire permet de modéliser fort correctement l'évolution de la variation du coefficient d'adhérence $\mu$ en fonction du glissement G, on a constaté que la précision du procédé proposé est améliorée si l'on choisit judicieusement le type de régression le plus approprié. Ainsi, le choix du type de régression approprié est inclus dans l'invention, qui propose en général un procédé de régulation comme expliqué ci-dessous.

L'invention s'applique donc à tout phénomène physique possédant les propriétés suivantes :

- Paramètre X de contrôle mesuré ou estimé.
- Paramètre Y mesuré ou estimé qui dépend de la valeur de X pour un environnement donné de la forme suivante : présence d'un maximum $Y_{max}$ ; $Y(0)$ faible et très inférieur à $Y_{max}$ (un facteur 10 au moins doit séparer les valeurs $Y(0)$ et $Y_{max}$; $Y(X)$ continûment croissant jusqu'à $X_{max}$).

L'objectif est de maximiser la valeur de Y le plus rapidement possible, pour un processus $Y(X)$ commençant pour des X faibles. On propose ici un algorithme robuste permettant notamment d'obtenir le maximum sans connaissance a priori de celui-ci et sans avoir besoin de le dépasser, dans un contexte de mesure (ou d'estimation) réelle (en général affectée d'un bruit sur l'entrée X et la sortie Y). La méthode ne nécessite pas la valeur absolue de Y.

On exploite les observations suivantes :

✓ Il existe une relation sous-jacente entre la sécante au maximum (en $X_{max}$) et la sécante en $X=X_{max}/2$. La relation typique est un quotient constant (Invariant). Il faut déterminer cet Invariant à chaque application de la méthode à un phénomène particulier.

Une méthode pratique, non limitative, de détermination de l'Invariant est la suivante :

$$Invt = \frac{\frac{Y}{X}(X_{max})}{\frac{Y}{X}(p.X_{max})}$$

où la valeur de p est toujours positive et inférieure à 1. Avantageusement, la valeur de p est comprise entre 0.25 et 0.75. Plus la valeur de p est faible, moins la méthode est précise mais plus la réactivité de l'asservissement est grande. Inversement, plus la valeur de p est grande, plus la précision est grande, mais plus faible est la réactivité car la dernière acquisition est trop proche du maximum. C'est pourquoi une valeur préférée de p est 0.5

On aura toujours : $0 < Invt \leq 1$. La grandeur "Invt", présentée ci-dessus comme un Invariant intrinsèque au phénomène physique considéré, devient en pratique un degré de liberté qui permet de mettre au point finement l'algorithme, en offrant une variable d'ajustement dans la mise au point d'un système particulier, pour toute application à un domaine particulier.

Typiquement, on considérera comme première approximation :

$$Invt = \frac{\frac{Y}{X}(X_{max})}{\frac{\frac{Y}{X}}{(\frac{X_{max}}{2})}} [Eq]$$

✓ On peut ajuster la variation de la sécante en fonction de X par une courbe d'interpolation simple (typiquement linéaire ou exponentielle, voire puissance). On peut procéder à un ajustement en temps réel. On peut alors en déduire la position du maximum $X_{max}$ avant de l'atteindre (extrapolation).

On peut utiliser d'autres types de régressions pour la relation sécante fonction de X, il convient alors de résoudre le système correspondant (équation reliant la valeur de la sécante au maximum à la valeur demi: [Eq]) pour obtenir la formule analytique ou approchée du $X_{max}$. Une erreur d'échelle sur Y (par exemple Y est surestimé systématiquement de 50%), ne change pas la valeur prédite de $X_{max}$, et ceci confère une faible sensibilité à l'effet d'échelle bien avantageuse.

On cherche à s'appuyer sur des Invariants de la courbe physique pour déduire le maximum en "mesurant" au fur et à mesure pendant la "montée" vers le maximum, en utilisant l'ensemble des informations disponibles pertinentes.

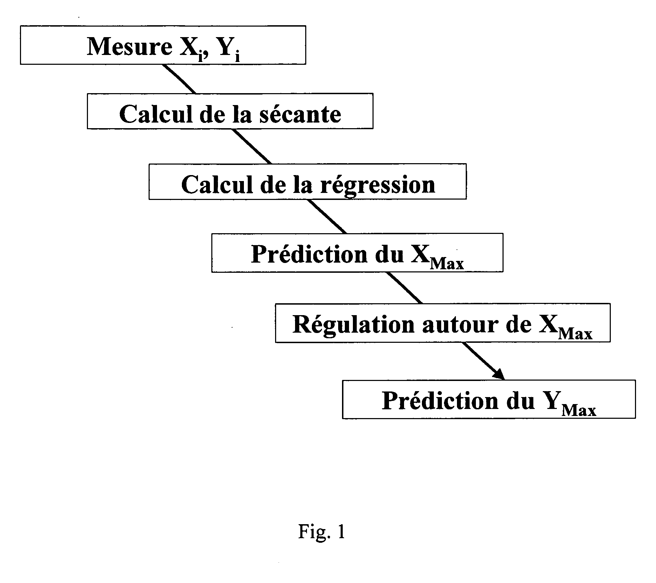

La figure 1 illustre l'algorithme proposé, dont les étapes principales sont les suivantes :

1. Acquisition des points $(X_i, Y_i)$, par mesure ou par estimation, selon les possibilités pratiques. Il convient d'acquérir au moins 2 points. On s'assure que $X_i$ est significativement non nul, on peut imposer ici un seuil minimal pour éliminer des valeurs trop faibles pour être pertinentes.

2. Calcul de la sécante, avec les valeurs précédentes on évalue la valeur de la sécante, par un calcul direct $\alpha_i = Y_i/X_i$, ou en procédant à une régression adaptée, par exemple linéaire : $\Sigma_{XX} = \Sigma X_i^2$, $\Sigma_{XY} = \Sigma X_j \cdot Y_j$, $\alpha_i = \frac{\Sigma XY}{\Sigma XX}$ en considérant tous les points d'indice inférieur ou égal à i de façon à s'affranchir du bruit. En effet, la régression linéaire est par nature beaucoup moins sensible au bruit de mesure sur chaque point individuel, les perturbations ayant tendance à "s'annuler" si on considère un nombre de points suffisant (cfr. propriétés statistiques de base). Cette approche est particulièrement intéressante car, contrairement au passé, on ne s'intéresse pas aux valeurs individuelles (imprécises car bruitées) mais à des tendances se dégageant de plusieurs valeurs. On obtient donc les couples $(\alpha_i, X_i)$.

3. Calcul de la régression avec $(\alpha_i, X_i)$ on calcule une régression à partir d'un nombre « n » suffisant de points de mesure ou d'estimation, typiquement 5 points, encore que cela doive être affiné selon le phénomène physique en question et selon le niveau de bruit.

- Cas d'une régression linéaire :

$$A^{Lin} = \frac{n \cdot \Sigma X \cdot \alpha - \Sigma X \cdot \Sigma \alpha}{n \cdot \Sigma X^2 - (\Sigma X)^2}, \; B^{Lin} = \frac{\Sigma \alpha \cdot \Sigma X^2 - \Sigma X \cdot \alpha \cdot \Sigma X}{n \cdot \Sigma X^2 - (\Sigma X)^2}$$

- Cas d'une régression exponentielle :

$$A^{Exp} = \frac{n \cdot \Sigma X \cdot Ln(\alpha) - \Sigma X \cdot \Sigma Ln(\alpha)}{n \cdot \Sigma X^2 - (\Sigma X)^2},$$

$$B^{Exp} = \frac{\Sigma Ln(\alpha) \cdot \Sigma X^2 - \Sigma X \cdot Ln(\alpha) \cdot \Sigma X}{n \cdot \Sigma X^2 - (\Sigma X)^2}$$

Par la régression la plus adaptée, on obtient donc les coefficients A et B. D'autres régressions que celles indiquées pourraient être adoptées. Les différentes régressions à envisager sont bien connues de l'homme du métier, qui saura obtenir les coefficients de la régression choisie.

4. On calcule ensuite une estimation de $X_{max}$ :

- Pour le cas d'une régression linéaire, on obtient :

$$X_{max} = -\frac{B^{Lin}}{A^{Lin}} \cdot \frac{1 - Invt}{1 - p \cdot Invt},$$

avec $\alpha = A^{Lin} \cdot X + B^{Lin}$
- Pour le cas d'une régression exponentielle, on obtient :

$$X_{max} = \frac{Ln(Invt)}{p \cdot A^{Exp}},$$

avec $\alpha = e^{A^{Exp} \cdot X + B^{Exp}}$

5. Connaissant $X_{max}$, selon l'usage particulier de la méthode, on agit sur le paramètre le plus approprié. Par exemple, on asservit la valeur du paramètre X de façon à en maintenir la valeur à $X_{max}$.

6. On peut également, sans que ceci soit toujours utile, aller jusqu'au calcul d'une estimation de $Y_{max}$ :

- Pour le cas d'une régression linéaire, on détermine en outre $Y_{max}$ de la façon suivante, où $Y^{coeff\_lin}$ est un coefficient réglé expérimentalement :

$$Y_{max} = Y^{Coeff\_lin} \cdot X_{max} \cdot (A^{Lin} \cdot X_{max} + B^{Lin})$$

- Pour le cas d'une régression exponentielle, on détermine en outre $Y_{max}$ de la façon suivante, où $Y^{coeff\_exp}$ est un coefficient réglé expérimentalement

$$Y_{max} = Y^{Coeff\_exp} \cdot X_{max} \cdot e^{A^{Exp} \cdot X_{max} + B^{Exp}}$$

Exemple de calcul de $Y_{max}$ :

✓ Linéaire :

$$Y_{max} = \frac{X_{max}}{0.75} \cdot (A^{Lin} \cdot X_{max} + B^{Lin})$$

✓ Exponentielle :

$$Y_{max} = \frac{X_{max}}{1.19} \cdot e^{A^{Exp} \cdot X_{max} + B^{Exp}}$$

Il peut être utile de faire une petite correction sur la valeur prédite de $Y_{max}$ car la courbure autour du maximum ne correspond pas exactement au type de fonction considérée pour l'approximation de la sécante. Le coefficient de correction ($1/0.75 = Y^{coeff\_lin}$) dans le cas linéaire ou ($1/1.19 = Y^{coeff\_Exp}$) dans le cas exponentiel) doit être réglé expérimentalement au cas par cas, selon l'application de l'invention.

Examinons maintenant plus en détails quelques applications possibles de l'invention, la suite de la description n'étant ni limitative ni exhaustive.

Exemple 1 : maintien automatique du fonctionnement d'un pneu à un certain coefficient d'adhérence, par exemple au coefficient d'adhérence maxi $\mu_{max}$

Revenons à l'exemple d'application se rapportant à l'adhérence longitudinale : $\mu(G)$. Dans ce cas, comme déjà exposé dans la partie introductive de ce mémoire, Y est le coefficient d'adhérence longitudinale $\mu$ du pneumatique, c'est à dire le quotient de la force longitudinale, par exemple effort moteur ou effort de freinage, divisée par la force verticale appliquée, c'est à dire la charge appliquée sur le pneumatique, et X est le taux de glissement G du pneumatique (G = 0% lorsqu'il n'y a pas de glissement entre la vitesse du pneumatique et la vitesse du véhicule, c'est à dire si le pneu roule librement, et G = 100% si le pneu est bloqué en rotation). Typiquement, en fonction de l'environnement (nature du sol (asphalte, béton), sec ou mouillé (hauteur d'eau), température et niveau d'usure du pneumatique), la valeur de $\mu$ en fonction du glissement G peut varier énormément ($\mu$ vaut environ 0.15 sur de la glace et environ 1.2 sur un sol sec). On peut se reporter à la figure 4 donnant quelques courbes de $\mu$ en fonction du glissement G pour un XH1 195/65R15 neuf, mesuré à une condition de charge et de vitesse.

La méthode de contrôle du fonctionnement d'un pneumatique proposée par l'invention, que ce soit pour une mesure ou une application sur véhicule, permet en particulier d'asservir le glissement G de façon à le maintenir à une valeur optimale $G^{Opt}$ prédéterminé. Ledit glissement prédéterminé $G^{Opt}$ est plus particulièrement et de façon non limitative, choisi de telle sorte que la valeur prédéterminée du coefficient d'adhérence corresponde sensiblement à la valeur $\mu_{max}$. Dans ce cas, il est convenu d'appeler cette valeur optimale particulière $G_{max}$.

On observe que la position du maximum pour ce pneu varie en fonction du sol. En outre, parfois, il n'y a pas unicité. Pour un même niveau maximum atteint, on peut avoir deux glissements correspondants. Néanmoins, il existe un Invariant « Invt » commun à ces courbes.

Par application de l'équation de détermination de l'Invariant au cas de l'analyse du coefficient d'adhérence en fonction du glissement, l'Invariant est calculé en particulier de la façon suivante :

$$\text{Invt} = \frac{\frac{\mu}{G}(G_{max})}{\frac{\mu}{G}(p.G_{max})},$$

avec p ayant une valeur positive et inférieure à 1.

En ce qui concerne p, tout comme exposé ci-dessus, sa valeur est de préférence comprise entre 0.25 et 0.75, par exemple elle vaut 0.5, le lecteur étant renvoyé à la présentation générale ci-dessus quant aux conséquences du choix de la valeur de p.

On obtient ainsi :

$$\frac{\frac{\mu}{G}(G = G_{max})}{\frac{\mu}{G}(G = G_{max}/2)} \approx 0.58$$

On a introduit un Invariant « Invt » en procédant à un traitement des données à une première valeur d'un paramètre X, par exemple le glissement G, correspondant au maximum d'un autre paramètre Y, par exemple le coefficient d'adhérence $\mu_{max}$, et à une seconde valeur correspondant à 50% de la première valeur, par exemple 50% du glissement précédemment évoqué. On a vu que le choix d'un traitement à 50% est arbitraire et que, si l'on effectue un traitement à 25% ou à 75% du glissement correspondant au coefficient d'adhérence $\mu_{max}$, on peut aussi obtenir un Invariant. Ce choix fait donc partie de la phase expérimentale propre à chaque application spécifique.

Il convient ensuite de procéder à la détermination de la pente $\alpha_i$. On procède pour ce faire par calcul direct $\alpha_i = \mu_i/G_i$ ou on utilise une régression adaptée, par exemple une régression linéaire comme suit :

$$\Sigma_{GG} = \Sigma G_j^2, \Sigma_{G\mu} = \Sigma G_j \cdot \mu_j, \alpha_i, = \frac{\Sigma_{G\mu}}{\Sigma_{GG}}$$

Ou on calcule deux coefficients $A_p$ particuliers A et B par la régression linéaire suivante, appliquée à « n » points de mesure ou d'estimation :

$$A^{Lin} = \frac{n \cdot \Sigma G \cdot \alpha - \Sigma G \cdot \Sigma \alpha}{n \cdot \Sigma G^2 - (\Sigma G)^2}, B^{Lin} = \frac{\Sigma \alpha \cdot \Sigma G^2 - \Sigma G \cdot \alpha \cdot \Sigma G}{n \cdot \Sigma G^2 - (\Sigma G)^2}$$

avec $\alpha = A^{Lin} \cdot G + B^{Lin}$

Ensuite, en cas d'utilisation d'une régression linéaire, le calcul de $G^{Opt}$ se fait de la façon suivante :

$$G^{Opt} = -\frac{B^{Lin}}{A^{Lin}} \cdot \frac{1 - \text{Invt}}{1 - p \cdot \text{Invt}},$$

avec $\alpha = A^{Lin} \cdot G + B^{Lin}$

Le cas échéant, on peut poursuivre jusqu'à la détermination de la valeur de $\mu$ correspondant à $G^{Opt}$, de la façon suivante, où $\mu^{coeff\_lin}$ est un coefficient réglé expérimentalement :

$$\mu = \mu^{Coeff\_lin} \cdot G^{Opt} \cdot (A^{Lin} \cdot G^{Opt} + B^{Lin})$$

Le tableau suivant, déterminé avec une approche linéaire pour la sécante, illustre le calcul du glissement maximum à partir de mesures réelles faites sur un même pneumatique MICHELIN XH1 195/65-15 testé sur différents sols à une pression de gonflage de 2 bars :

| #Sol | 1 | 2 | 3 | 4 | 5 | 6 | 7 | 8 | 9 | 10 | 11 | 12 |
|---|---|---|---|---|---|---|---|---|---|---|---|---|
| $G_{max}$ réel | 10% | 11% | 11% | 13% | 13% | 13% | 12% | 13% | 9% | 9% | 15% | 15% |

(suite)

| #Sol | 1 | 2 | 3 | 4 | 5 | 6 | 7 | 8 | 9 | 10 | 11 | 12 |
|---|---|---|---|---|---|---|---|---|---|---|---|---|
| $\mu_{max}$ réel | 0.41 | 0.78 | 0.79 | 1.06 | 1.05 | 0.75 | 0.72 | 0.48 | 0.49 | 0.48 | 1.17 | 1.13 |
| $A^{Lin}$ mesuré | -64 | -109 | -105 | -108 | -110 | -76 | -77 | -60 | -81 | -127 | -97 | -88 |
| $B^{Lin}$ mesuré | 11 | 19 | 18 | 22 | 22 | 15 | 15 | 11 | 13 | 16 | 22 | 20 |
| $G_{max}$ prédit | 10% | 11% | 11% | 12% | 12% | 13% | 12% | 12% | 10% | 8% | 14% | 14% |
| $\mu_{max}$ prédit | 0.41 | 0.75 | 0.76 | 1.03 | 1.03 | 0.73 | 0.71 | 0.48 | 0.48 | 0.48 | 1.16 | 1.12 |

Ou encore, on calcule deux coefficients $A_p$ particuliers A et B par la régression exponentielle suivante :

$$A^{Exp} = \frac{n \cdot \Sigma G \cdot Ln(\alpha) - \Sigma G \cdot \Sigma Ln(\alpha)}{n \cdot \Sigma G^2 - (\Sigma G)^2},$$

$$B^{Exp} = \frac{\Sigma Ln(\alpha) \cdot \Sigma G^2 - \Sigma G \cdot Ln(\alpha) \cdot \Sigma G}{n \cdot \Sigma G^2 - (\Sigma G)^2}$$

Ensuite, en cas d'utilisation d'une régression exponentielle, le calcul de $G^{Opt}$ se fait de la façon suivante :

$$G^{Opt} = - \frac{Ln(Invt)}{p \cdot A^{Exp}},$$

avec $\alpha = e^{AExp \cdot G + BExp}$

Le cas échéant, on peut poursuivre jusqu'à la détermination de $\mu_{max}$, de la façon suivante, où $Y^{coeff\_exp}$ est un coefficient réglé expérimentalement :

$$\mu_{max} = \mu^{Coeff\_exp} \cdot G^{Opt} \cdot e^{A^{Exp} \cdot G^{Opt}} + B^{Exp}$$

On peut appliquer ce principe pour déterminer le maximum d'adhérence pour tout type de pneu et pour tout type de sol, ce qui s'avère fort avantageux pour des tests industriels de pneumatiques.

La méthode proposée est auto-adaptative et très robuste car on ne traite que la variation du coefficient d'adhérence et non sa valeur absolue. On a observé que la sensibilité au bruit est très faible.

Le caractère intrinsèque de la méthode ci-dessus appliquée à l'adhérence longitudinale d'un pneu en fonction de son glissement fait qu'elle est tout particulièrement adaptée pour conduire des tests de pneumatiques, et plus encore pour construire des simulations. Notamment, elle est tout spécialement adaptée à la modélisation de l'adhérence d'un pneu dans un système de freinage d'un véhicule.

Dans l'industrie du pneumatique, on peut appliquer l'invention pour tester ou mesurer les pneumatiques. Un aspect de l'invention est donc une méthode de test en glissement d'un pneumatique comprenant les étapes suivantes :

- Mettre le pneu en roulement sur un sol choisi (ce peut être une route, une piste d'essai, une machine d'essai comportant un sol plan ou comportant un volant),
- Appliquer sur le pneu une charge $F_{Z1}$ prédéterminée,
- Appliquer au pneu un glissement prédéterminé (en agissant sur la vitesse relative du pneumatique par rapport au sol), tel que le pneu reste en deçà de la limite d'adhérence,
- Mesurer ou estimer l'effort longitudinal du pneumatique $F_{X1}$,
- Calculer une valeur du coefficient d'adhérence $\mu_1 = F_{X1}/F_{Z1}$,
- Reprendre les étapes précédentes pour calculer au moins une autre valeur « i » du coefficient d'adhérence $\mu_i$ pour au moins un autre couple « i » de sollicitations $F_{Xi}/F_{Zi}$ et mesurer le glissement associé $G_i$,
- Déterminer pour chacune des valeurs du coefficient d'adhérence calculées la pente $\alpha_i$ de la droite passant par l'origine et par $(G_i, \mu_i)$,
- Calculer des coefficients $A_p$ par calcul direct ou par une régression appropriée à partir d'un nombre suffisant de

paires avec $(\alpha_i, G_i)$ de façon à modéliser une courbe de variation $\alpha_i = f(G_i, A_p)$,

- Calculer un glissement optimal permettant d'atteindre une valeur prédéterminée du coefficient d'adhérence $G^{Opt}$, en utilisant un Invariant "Invt" prédéterminé.

Bien entendu, comme le lecteur l'aura compris, on peut choisir l'Invariant en mettant au point expérimentalement la méthode de test. Il peut être avantageux, par exemple pour choisir une première valeur de l'Invariant en cours de mise au point, de déterminer l'Invariant de la façon suivante :

$$Invt = \frac{\frac{\mu}{G}(G_{max})}{\frac{\mu}{G}(p.G_{max})},$$

avec p ayant une valeur positive et inférieure à 1.

De façon similaire à ce qui a été exposé ci-dessus, on peut calculer deux coefficients $A_p$ particuliers A et B par une régression choisie dans le groupe constitué par une régression linéaire et une régression exponentielle.

De même encore, on peut adopter comme valeur de p une valeur comprise entre 0.25 et 0.75, typiquement 0.5.

Exemple 2 : détermination du glissement optimal lors d'un freinage ou en cas d'effort moteur

On sait qu'un système de freinage d'un véhicule, tout efficace qu'il soit, est cependant optimisé pour un nombre limité de pneumatiques, choisis par le constructeur, et qu'il ne s'adapte pas aux pneus montés réellement sur le véhicule. Notamment, il ne s'adapte pas aux pneumatiques hivernaux, dont on sait par ailleurs que le comportement est radicalement différent, notamment l'adhérence et le glissement à effort $F_X$ au sol donné. Il en résulte que l'efficacité d'un système de freinage d'un véhicule pourrait être améliorée s'il pouvait s'adapter automatiquement aux pneus effectivement utilisés sur le véhicule.

L'invention s'étend donc à un système de contrôle de la stabilité d'un véhicule, comportant des moyens pour imprimer à un pneu destiné à rouler sur le sol un glissement, des moyens de modulation de ce glissement (action sur la vitesse de la roue), et comprenant un contrôleur utilisant au moins le paramètre glissement $G^{Opt}$ correspondant à une valeur prédéterminée du coefficient d'adhérence $\mu$, ledit contrôleur comportant des moyens pour calculer le ou lesdits paramètres de la façon suivante :

- lors de chaque activation des moyens pour imprimer au pneu un glissement, pour au moins deux niveaux « i » différents de glissement $G_i$ à condition qu'il n'y ait pas perte d'adhérence, déterminer les valeurs du coefficient d'adhérence $\mu_i$,
- Déterminer la pente $\alpha_i$ de la droite passant par l'origine et par $(G_i, \mu_i)$,
- Calculer des coefficients $A_p$ par calcul direct ou par une régression appropriée, en particulier une régression choisie dans le groupe constitué par une régression linéaire et une régression exponentielle, à partir d'un nombre suffisant de paires avec $(\alpha_i, G_i)$ de façon à modéliser une courbe de variation $\alpha_i = f(G_i, A_p)$,
- Calculer le glissement optimal $G^{Opt}$ en utilisant un Invariant "Invt" prédéterminé,
- Agir sur les moyens pour imprimer au pneu glissement maintenu proche de sa valeur optimale $G^{Opt}$.

Bien entendu, dans le cas d'un véhicule à moteur à combustion interne d'architecture courante à l'heure actuelle, les moyens pour imprimer au pneu un glissement sont essentiellement les freins en situation de freinage et sont essentiellement le système de gestion du moteur en cas d'effort moteur. L'homme du métier n'aura aucune difficulté à adapter la présente invention aux autres architectures de véhicule, par exemple aux véhicules électriques.

Insistons ici encore sur un aspect déjà évoqué : l'invention telle que présentée notamment dans le paragraphe précédent n'exclut pas que le contrôleur du système de contrôle de la stabilité d'un véhicule puisse être chargé, outre les moyens décrits, de routines matérialisant d'autres stratégies de pilotage du glissement qui pourraient être parfois préférables, par exemple vu des valeurs obtenues pour les paires $(G_i, \mu_i)$ lors d'une activation particulière des moyens pour imprimer au pneu un glissement.

En particulier, une bonne approche de détermination de l'Invariant est la suivante :

$$Invt = \frac{\frac{\mu}{G}(G_{max})}{\frac{\mu}{G}(p.G_{max})},$$

plus particulièrement encore avec p ayant une valeur comprise entre 0.25 et 0.75, typiquement 0.5.

Dans une mise en oeuvre particulière de l'invention, le dispositif de modulation de glissement agit sur la commande de freinage. Dans une autre mise en oeuvre de l'invention, le dispositif de modulation de glissement agit sur le couple moteur aux roues.

Il est proposé de créer un nouvel algorithme particulièrement utile pour un système de freinage d'un véhicule, permettant de déterminer la position du coefficient d'adhérence $\mu_{max}$ en se basant sur l'Invariant « Invt » présenté ci-dessus. Pour rappel, un tel système procède à une estimation du coefficient d'adhérence $\mu$ puis choisit un glissement optimal grâce à une courbe de référence. Il est proposé de remplacer ces étapes par ce qui suit.

La mise en oeuvre de ce principe nécessite quelques modifications dans un contrôleur ABS :

- Il est préférable que la fréquence de calcul soit supérieure à 40Hz.
- Il convient de préférence de régler le déclenchement de l'ABS de façon à avoir le temps d'acquérir un nombre de point suffisamment élevé pour que le calcul de la cible soit fiable (représentatif).
- Il s'avère avantageux d'éliminer les points de mesure à un glissement trop faible (correspondant par exemple à un glissement inférieur à 1%).
- Afin d'obtenir une très bonne précision sur le glissement G, il est avantageux d'acquérir la vitesse du véhicule par un moyen spécifique, et non par un traitement des vitesses des roues (GPS, observation du sol, ...)

Avec le nouvel algorithme proposé ci-dessus, l'efficacité du système de freinage d'un véhicule sera très bonne dans toute la plage de pneus utilisables de façon réaliste sur véhicule.

Le nouvel algorithme développé permet au système de s'adapter à n'importe quel type de pneu automatiquement en ne nécessitant, a priori, aucun capteur supplémentaire et aucune mesure dans la bande de roulement d'un pneu. De plus, cet algorithme permet de se dispenser d'un réglage fin pour un type de pneu choisi pour un véhicule donné.

Comme précisé précédemment, la méthode permet d'obtenir des résultats non seulement avec des valeurs mesurées mais également avec des valeurs estimées. Des informations sur les efforts Fx, Fy et Fz réels (et non pas estimés) pourraient permettre d'avoir une cible plus précise et/ou de faire des contrôles de vraisemblance et ainsi d'améliorer la fiabilité du système de freinage d'un véhicule.

Exemple 3 : analyse du fonctionnement d'un pneu en dérive, force latérale $F_y$ développée (également appelée poussée de dérive)

On expose ci-dessous une autre application. Il s'agit de caractériser la force latérale $F_y$ en fonction de l'angle $\delta$ de dérive du pneu (angle entre la projection au sol du plan de la roue et le vecteur vitesse du pneu au sol). On peut prédéterminer un angle de dérive optimal $\delta^{Opt}$, par exemple l'angle de dérive auquel le pneu développe le maximum de la force latérale $F_y$, et on peut prédéterminer la force latérale $F_{yMAX}$. La force latérale maximale est critique par exemple pour l'équilibre d'un véhicule en virage. C'est pourquoi les tests d'un pneumatique dans cette configuration de fonctionnement sont une application privilégiée de l'invention. Dans ce cas, par exemple, l'invention permet la mise en oeuvre d'une méthode de contrôle du fonctionnement d'un pneumatique comportant une phase de prédiction de la valeur de l'angle de dérive $\delta$ d'un pneumatique où la force latérale est maximale et l'établissement d'un signal d'alerte quand l'angle de dérive $\delta$ est proche de $\delta^{Opt}$, ou une méthode dans laquelle on asservit l'angle de dérive $\delta$ de façon à le maintenir à $\delta^{Opt}$, ou encore une méthode dans laquelle, en cas d'apparition du signal d'alerte, on réduit l'angle de dérive $\delta$.

La relation entre la force latérale $F_y$ et la dérive $\delta$ est du même type que pour $\mu$ et G de la partie précédente. Dès lors, on peut par exemple déterminer l'Invariant de la façon suivante :

$$Invt = \frac{\frac{F}{\delta}(\delta^{Opt})}{\frac{F}{\delta}(p.\delta^{Opt})}.$$

En ce qui concerne p, tout comme exposé ci-dessus, sa valeur est de préférence comprise entre 0.25 et 0.75, par exemple elle vaut 0.5, le lecteur étant renvoyé à la présentation générale ci-dessus quant aux conséquences du choix de la valeur de p. Dans ce cas précis, la grandeur "Invt" remarquable est plus élevée. On a obtenu 0.8, en retenant un seuil minimal d'angle de dérive de 2°, pour éviter les valeurs de trop faible dérive qui perturbe la détermination de la sécante.

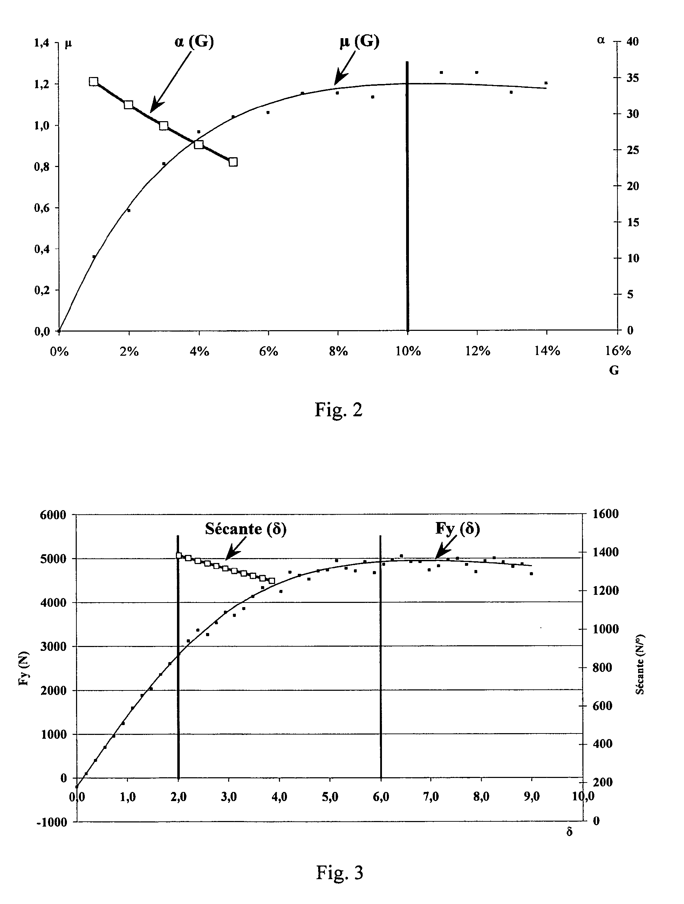

La figure 3 est une courbe de variation de la poussée de dérive par rapport à l'angle de dérive et la variation au même angle de dérive de la sécante passant par l'origine et le point de la courbe précédente au même angle de dérive. Pour un pneumatique Michelin Primacy 235/55R17 chargé à 5000 Newton, sans carrossage, l'angle maxi de dérive estimé par la méthode vaut 5,5°, et la poussée de dérive maximale estimée vaut 5935 Newton.

Il convient ensuite de procéder à la détermination de la pente $\alpha_i$. On procède pour ce faire par calcul direct $\alpha_i = F_i/\delta$ ou on utilise une régression adaptée, par exemple une régression linéaire comme suit :

$$\Sigma_{\delta\delta} = \Sigma\delta_j^2, \Sigma_{\delta F} = \Sigma\delta_j \cdot F_j, \alpha_i = \frac{\Sigma_{\delta F}}{\Sigma_{\delta\delta}}$$

Ou on calcule deux coefficients $A_p$ particuliers A et B par la régression linéaire suivante appliquée à « n » points de mesure ou d'estimation :

$$A^{Lin} = \frac{n \cdot \Sigma\delta \cdot \alpha - \Sigma\delta \cdot \Sigma\alpha}{n \cdot \Sigma\delta^2 - (\Sigma\delta)^2}, B^{Lin} = \frac{\Sigma\alpha \cdot \Sigma\delta^2 - \Sigma\delta \cdot \alpha \cdot \Sigma\delta}{n \cdot \Sigma\delta^2 - (\Sigma\delta)^2}$$

Ensuite, en cas d'utilisation d'une régression linéaire, le calcul de $\delta^{Opt}$ se fait de la façon suivante :

$$\delta^{Opt} = - \frac{B^{Lin}}{A^{Lin}} \cdot \frac{1 - Invt}{1 - p \cdot Invt},$$

avec $\alpha = A^{Lin} \cdot \delta + B^{Lin}$

En appliquant l'algorithme, on prédétermine que la force latérale ($F_y$) atteindra son maximum à un angle de dérive $\delta$ valant environ 6°. Cette information est précieuse car on sait alors que le pneumatique n'a plus beaucoup de potentiel de poussée transversale avant de se mettre à glisser (saturation des poussées transversales, ce qui peut empêcher un véhicule de tourner).

Le cas échéant, on peut poursuivre jusqu'à la détermination de la valeur de F correspondant à $\delta^{Opt}$, de la façon suivante, où $F^{coeff\_lin}$ est un coefficient réglé expérimentalement :

$$F_{max} = F^{Coeff\_lin} \cdot \delta^{Opt} \cdot (A^{Lin} \cdot \delta^{Opt} + B^{Lin})$$

Ou encore, on calcule deux coefficients $A_p$ particuliers A et B par la régression exponentielle suivante appliquée à « n » points de mesure ou d'estimation :

$$A^{Exp} = \frac{n \cdot \Sigma\delta \cdot Ln(\alpha) - \Sigma\delta \cdot \Sigma Ln(\alpha)}{n \cdot \Sigma\delta^2 - (\Sigma\delta)^2},$$

$$B^{Exp} = \frac{\Sigma Ln(\alpha) \cdot \Sigma\delta^2 - \Sigma\delta \cdot Ln(\alpha) \cdot \Sigma\delta}{n \cdot \Sigma\delta^2 - (\Sigma\delta)^2}$$

Ensuite, en cas d'utilisation d'une régression exponentielle, le calcul de $\delta^{Opt}$ se fait de la façon suivante :

$$\delta^{Opt} = \frac{Ln(Invt)}{p \cdot A^{Exp}},$$

avec $\alpha = e^{AExp \cdot \delta + BExp}$

Le cas échéant, on peut poursuivre jusqu'à la détermination de $F_{max}$ de la façon suivante, où $F^{coeff\_exp}$ est un coefficient réglé expérimentalement :

$$F_{max} = F^{Coeff\_exp} \cdot \delta^{Opt} \cdot e^{A^{Exp} \cdot \delta^{Opt} + B^{Exp}}$$

Exemple 3 a: application pour tester ou mesurer des pneumatiques.

Dans l'industrie du pneumatique, on peut appliquer l'invention pour tester ou mesurer les pneumatiques. Un autre aspect de l'invention est donc une méthode de test en dérive d'un pneumatique comprenant les étapes suivantes :

- Mettre le pneu en roulement sur le sol,
- Appliquer sur le pneu une charge $F_{Z1}$ prédéterminée
- Appliquer au pneu un angle de dérive $\delta_i$ prédéterminé, tel que le pneu reste en deçà de la limite d'adhérence, et mesurer ou estimer la poussée de dérive $F_i$ correspondant à cet angle de dérive $\delta_i$ ;
- Reprendre les étapes précédentes pour calculer au moins une autre paire « i » de valeurs $(\delta_i, F_i)$ ;
- Déterminer les valeurs correspondantes de la pente $\alpha_i$, de la droite passant par l'origine et par $(\delta_i, F_i)$ ;
- Calculer des coefficients $A_p$ par calcul direct ou par une régression appropriée à partir d'un nombre suffisant de paires $(\alpha_i, \delta_i)$ de façon à modéliser une courbe de variation $\alpha_i = f(\delta_i, A_p)$ ;
- Calculer une valeur de l'angle de dérive $\delta^{Opt}$ en utilisant un Invariant "Invt" prédéterminé ;

De même, on peut choisir l'Invariant en mettant au point expérimentalement la méthode de test. Il peut être avantageux, par exemple pour choisir une première valeur de l'Invariant en cours de mise au point, de déterminer l'Invariant de la façon suivante :

$$Invt = \frac{\frac{F}{\delta}(\delta^{Opt})}{\frac{F}{\delta}(p.\delta^{Opt})},$$

avec p ayant une valeur positive et inférieure à 1.

De façon similaire à ce qui a été exposé ci-dessus, on peut calculer deux coefficients $A_p$ particuliers A et B par une régression choisie dans le groupe constitué par une régression linéaire et une régression exponentielle.

De même encore, on peut adopter comme valeur de p une valeur comprise entre 0.25 et 0.75, typiquement 0.5.

Exemple 3 b: application pour déterminer la dérive maximale possible d'un véhicule en courbe.

Dans une application de l'invention à la stabilité d'un véhicule équipé de pneumatiques, la méthode de contrôle du fonctionnement d'un pneumatique proposée par l'invention, comportant une phase de prédiction de la valeur de l'angle de dérive $\delta$ d'un pneumatique (l'angle de dérive est l'angle entre la projection au sol du plan de la roue et le vecteur vitesse du véhicule au sol) où la force latérale est maximale, permet de donner, si l'on s'approche trop du potentiel maximal du pneumatique en poussée de dérive, une alerte au conducteur ou, dans une version plus perfectionnée intégrée à un système de contrôle automatique de stabilité d'un véhicule, en cas d'apparition du signal d'alerte, on plafonne ou on réduit automatiquement la vitesse du véhicule.

On peut aussi appliquer l'invention à un véhicule actif (intégrant un contrôle actif du braquage des roues des essieux avant et/ou arrière, ou un contrôle de roulis actif, une suspension active ou tout système permettant de modifier l'équilibre latéral du véhicule et donc en particulier le niveau de force latérale demandé aux pneumatiques), c'est à dire capable de réagir en fonction d'ordres venant d'un système de contrôle automatique de la stabilité latérale du véhicule.

Sous cet aspect, l'invention s'étend ainsi à un système de contrôle de la stabilité d'un véhicule comportant au moins un pneu destiné à rouler sur le sol, le véhicule étant équipé d'un contrôleur de trajectoire visant à maintenir le fonctionnement du pneumatique à une valeur cible prédéterminée de la poussée de dérive $F^{cible}$ et d'un système de commande d'un paramètre choisi (dénommé paramètre «$\lambda$»), lié à la technologie employée sur le véhicule (par exemple, le paramètre «$\lambda$» est le braquage des roues avant et arrière pour une direction active, ou le paramètre «$\lambda$» est l'angle de roulis pour l'antiroulis actif, le paramètre «$\lambda$» est le niveau de freinage pour le contrôle de stabilité via les actuateurs de frein...) en fonction des ordres imprimés par le conducteur du véhicule sur son moyen de commande et en fonction des ordres délivrés par le contrôleur de trajectoire, c'est à dire ayant une action directe ou indirecte sur l'angle de dérive des pneumatiques sur chaque essieu, le contrôleur de trajectoire utilisant au moins une valeur optimale $\delta^{Opt}$ de l'angle de dérive correspondant à la valeur maximale de la poussée de dérive $F_{cibie}$, ledit contrôleur comportant des moyens pour effectuer les opérations suivantes (traiter essieu par essieu -la valeur de l'avant est différente de celle de l'arrière-, différencier pneumatique gauche et pneumatique droit, sont souhaitables, mais pour la suite de l'explication, on ne traite que le raisonnement sur une roue, l'homme de l'art pouvant aisément étendre à l'ensemble des roues):

- lors de chaque activation du système de commande de variation de $\lambda$, pour au moins deux niveaux « i » différents d'angle de dérive, relever différentes valeurs de $F_{Yi}$, et l'angle de dérive associée $\delta_i$, obtenue par estimation ou mesure directe,
- Déterminer la pente $\alpha_i$ de la droite passant par l'origine et par $(\delta_i, F_{Yi})$,
- Calculer des coefficients $A_p$ par calcul direct ou par une régression appropriée, en particulier une régression choisie dans le groupe constitué par une régression linéaire et une régression exponentielle, à partir d'un nombre suffisant de paires avec $(\alpha_i, \delta_i)$ de façon à modéliser une courbe de variation $\alpha_i = f(\delta_i, A_p)$,
- Calculer la valeur optimale de l'angle de dérive $\delta^{Opt}$ associée à la valeur maximale de la poussée de dérive $F_{cible}$ en utilisant un Invariant "Invt" prédéterminé ;
- Etablir un signal d'alerte quand l'angle de dérive $\delta$ est proche de $\delta^{Opt}$.

Comme déjà expliqué ci dessus, le calcul de la valeur optimale de l'angle de dérive $\delta^{Opt}$ se fait par la formule de modélisation (courbe de variation évoquée ci-dessus) résultant du choix de calcul direct ou de régression. En particulier, une bonne approche de détermination de l'Invariant est la suivante :

-

$$ Invt = \frac{\dfrac{F}{\delta}(\delta^{Opt})}{\dfrac{F}{\delta}(p.\delta^{Opt})}, $$

plus particulièrement encore avec p ayant une valeur comprise entre 0.25 et 0.75, typiquement 0.5.

Dans une mise en oeuvre particulière de cet aspect de l'invention, en cas d'apparition d'un signal d'alerte, on agit sur le système de commande de façon à maintenir l'angle de dérive $\delta$ à la valeur optimale $\delta^{Opt}$. Dans une autre mise en oeuvre de cet aspect de l'invention, en cas d'apparition d'un signal d'alerte, on plafonne ou on réduit la vitesse du véhicule.

Soulignons, et ceci est important, que les aspects d'exploitation du coefficient d'adhérence en fonction du glissement, et d'exploitation de la poussée de dérive en fonction de l'angle de dérive, ne sont pas exclusifs l'un de l'autre, bien au contraire. Notamment, il y a avantage à ce qu'un système de contrôle automatique de la trajectoire d'un véhicule exploite simultanément ces deux aspects. Ainsi, un aspect de l'invention concerne un méthode d'asservissement du fonctionnement d'un pneumatique dans une configuration donnée, visant à maintenir ledit fonctionnement d'un pneumatique à une valeur prédéterminée du coefficient d'adhérence $\mu$, comprenant les étapes suivantes :

- Déterminer des estimations ou des mesures $(G_i, \mu_i)$ pour une pluralité de couples « i » de valeurs ;
- Calculer une estimation du glissement optimal du pneu $G^{Opt}$ en fonction des caractéristiques physiques intrinsèques dudit pneumatique et de la configuration réelle de fonctionnement existante ;
- Asservir la configuration en fonction de l'écart entre $G_{instantané}$ et $G^{Opt}$.

Exemple 4 (tests de traction d'éprouvettes métalliques)

Comme autre cas d'application, on peut évoquer l'analyse de l'extension d'une éprouvette sollicitée en traction, en fonction de l'allongement (de façon à éviter la rupture violente de la pièce en arrêtant le test juste avant la rupture). Dans ce cas, le paramètre X est l'allongement ; on procède à une estimation de l'allongement maximal à partir des mesures de force et d'allongement au début de la sollicitation, et on arrête le test à un allongement choisi proche mais inférieur à l'allongement maximal. On peut en outre estimer la force maximale possible.

**Revendications**

1. Méthode d'asservissement pour un phénomène dont un paramètre Y varie en fonction d'un paramètre X selon une loi présentant une croissance, un extremum et une décroissance, dans laquelle on asservit la valeur du paramètre X pour maintenir la valeur d'un paramètre Y à une valeur optimale, comprenant les étapes suivantes :

   - Déterminer des estimations ou des mesures $(X_i, Y_i)$ pour au moins une paire « i » de valeurs ;
   - Déterminer les valeurs correspondantes de la pente $\alpha_i$, de la droite passant par l'origine et par $(X_i, Y_i)$ ;
   - Calculer des coefficients $A_p$ par calcul direct ou par une régression à partir d'un nombre suffisant de paires avec $(\alpha_i, X_i)$ de façon à modéliser une courbe de variation $\alpha_i, = f(X_i, A_p)$ ;
   - Calculer une valeur cible $X_{max}$ en utilisant un Invariant "Invt" prédéterminé.

**2.** Méthode d'asservissement selon la revendication 1, dans laquelle on asservit la valeur du paramètre X de façon à en maintenir la valeur à $X_{max}$.

**3.** Méthode d'asservissement selon la revendication 1, dans laquelle on détermine l'Invariant de la façon suivante :

$$Invt = \frac{\frac{Y}{X}(X_{max})}{\frac{Y}{X}(p.X_{max})},$$

avec p ayant une valeur positive et inférieure à 1.

**4.** Méthode d'asservissement selon la revendication 3, dans laquelle la valeur de p est comprise entre 0.25 et 0.75.

**5.** Méthode d'asservissement selon la revendication 4, dans laquelle p vaut 0.5.

**6.** Méthode d'asservissement selon la revendication 1, dans laquelle la détermination de la pente $\alpha_i$, se fait par calcul direct $\alpha_i = Y_i/X_i$.

**7.** Méthode d'asservissement selon la revendication 1, dans laquelle la détermination de la pente $\alpha_i$, se fait en procédant à une régression adaptée.

**8.** Méthode d'asservissement selon la revendication 1, dans laquelle on procède à une régression linéaire :

$$\Sigma_{XX} = \Sigma X_j^2, \Sigma_{XY} = \Sigma X_j \cdot Y_j, \; \alpha_i = \frac{\Sigma_{XY}}{\Sigma_{XX}}$$

**9.** Méthode d'asservissement selon la revendication 1, dans laquelle deux coefficients $A_p$ particuliers A et B sont calculés par la régression linéaire suivante appliquée à « n» points de mesure ou d'estimation :

$$A^{Lin} = \frac{n \cdot \Sigma X \cdot \alpha - \Sigma X \cdot \Sigma \alpha}{n \cdot \Sigma X^2 - (\Sigma X)^2}, \; B^{Lin} = \frac{\Sigma \alpha \cdot \Sigma X^2 - \Sigma X \cdot \alpha \cdot \Sigma X}{n \cdot \Sigma X^2 - (\Sigma X)^2}$$

**10.** Méthode d'asservissement selon la revendication 1, dans laquelle deux coefficients $A_p$ particuliers A et B sont calculés par la régression exponentielle suivante appliquée à « n » points de mesure ou d'estimation :

$$A^{Exp} = \frac{n \cdot \Sigma X \cdot Ln(\alpha) - \Sigma X \cdot \Sigma Ln(\alpha)}{n \cdot \Sigma X^2 - (\Sigma X)^2},$$

$$B^{Exp} = \frac{\Sigma Ln(\alpha) \cdot \Sigma X^2 - \Sigma X \cdot Ln(\alpha) \cdot \Sigma X}{n \cdot \Sigma X^2 - (\Sigma X)^2}$$

**11.** Méthode d'asservissement selon la revendication 9, dans laquelle le calcul de $X_{max}$ se fait de la façon suivante :

$$X_{max} = -\frac{B^{Lin}}{A^{Lin}} \cdot \frac{1 - Invt}{1 - p \cdot Invt},$$

avec $\alpha = A^{Lin} \cdot X + B^{Lin}$

**12.** Méthode d'asservissement selon la revendication 10, dans laquelle le calcul de $X_{max}$ se fait de la façon suivante :

$$X_{max} = \frac{Ln(Invt)}{p \cdot A^{Exp}},$$

avec $\alpha = e^{A^{Exp} \cdot X + B^{Exp}}$

**13.** Méthode d'asservissement selon la revendication 9, dans laquelle on détermine en outre $Y_{max}$ de la façon suivante, où $Y^{coeff\_lin}$ est un coefficient réglé expérimentalement :

$$Y_{max} = Y^{Coeff\_lin} \cdot X_{max} \cdot (A^{Lin} \cdot X_{max} + B^{Lin})$$

**14.** Méthode d'asservissement selon la revendication 10, dans laquelle on détermine en outre $Y_{max}$ de la façon suivante, où $Y^{coeff\_exp}$ est un coefficient réglé expérimentalement :

$$Y_{max} = Y^{Coeff\_exp} \cdot X_{max} \cdot e^{A^{Exp} \cdot X_{max} + B^{Exp}}$$

**15.** Système de liaison au sol dans lequel un paramètre caractéristique Q du fonctionnement d'un pneumatique sur un véhicule en mouvement varie en fonction d'un paramètre P selon une loi présentant une croissance, un extremum et une décroissance, la valeur dudit paramètre P étant imposée par un contrôleur de manière directe ou indirecte, agissant sur au moins l'un des éléments choisis dans le groupe comportant le couple de rotation appliqué au pneumatique, l'angle de braquage du pneumatique, l'angle de carrossage du pneumatique et la force verticale appliquée au pneumatique, pour maintenir la valeur d'un paramètre Q à une valeur choisie, dans lequel le contrôleur comporte des moyens pour :

- Déterminer des estimations ou des mesures $(P_i, Q_i)$ pour au moins une paire « i » de valeurs ;
- Déterminer les valeurs correspondantes de la pente $\beta_i$, de la droite passant par l'origine et par $(P_i, Q_i)$ ;
- Calculer des coefficients $A_p$ par calcul direct ou par une régression à partir d'un nombre suffisant de paires avec $(\beta_i, P_i)$ de façon à modéliser une courbe de variation $\beta_i = f(P_i, A_p)$ ;
- Calculer une valeur cible $P^{Cible}$ en utilisant un Invariant "Invt" prédéterminé
- Passer en mode « actif» lorsque la différence entre $P^{Instantané}$ et $P^{Cible}$ est supérieure en valeur absolue à un seuil prédéterminé.

**16.** Méthode de contrôle du fonctionnement en glissement d'un pneumatique, comprenant les étapes suivantes :

- Déterminer des estimations ou des mesures $(G_i, \mu_i)$ pour au moins une paire « i » de valeurs ;
- Déterminer les valeurs correspondantes de la pente $\alpha_i$, de la droite passant par l'origine et par $(G_i, \mu_i)$ ;
- Calculer des coefficients $A_p$ par calcul direct ou par une régression à partir d'un nombre suffisant de paires avec $(\alpha_i, G_i)$ de façon à modéliser une courbe de variation $\alpha_i = f(G_i, A_p)$.

**17.** Méthode de contrôle du fonctionnement en glissement d'un pneumatique selon la revendication 16, dans laquelle on réalise une estimation du glissement optimal $G^{Opt}$ en utilisant un Invariant "Invt" prédéterminé.

**18.** Méthode de contrôle du fonctionnement en glissement d'un pneumatique selon la revendication 17, dans laquelle on asservit le glissement G de façon à le maintenir à $G^{Opt}$.

**19.** Méthode de contrôle du fonctionnement en glissement d'un pneumatique selon la revendication 17, dans laquelle la valeur de l'Invariant "Invt" est sensiblement 0.58.

**20.** Méthode de contrôle du fonctionnement en glissement d'un pneumatique selon la revendication 17, dans laquelle on détermine l'Invariant de la façon suivante :

$$Invt = \frac{\frac{\mu}{G}(G_{max})}{\frac{\mu}{G}(p \cdot G_{max})},$$

avec p ayant une valeur positive et inférieure à 1.

**21.** Méthode de contrôle du fonctionnement en glissement d'un pneumatique selon la revendication 20, dans laquelle la valeur de p est comprise entre 0.25 et 0.75.

**22.** Méthode de contrôle du fonctionnement en glissement d'un pneumatique selon la revendication 21, dans laquelle p vaut 0.5.

**23.** Méthode de contrôle du fonctionnement en glissement d'un pneumatique selon la revendication 17, dans laquelle la détermination de la pente $\alpha_i$, se fait par calcul direct $\alpha_i = \mu_i/G_i$.

**24.** Méthode de contrôle du fonctionnement en glissement d'un pneumatique selon la revendication 17, dans laquelle la détermination de la pente $\alpha_i$, se fait en procédant à une régression adaptée.

**25.** Méthode de contrôle du fonctionnement en glissement d'un pneumatique selon la revendication 17, dans laquelle on procède à une régression linéaire :

$$\Sigma_{GG} = \Sigma G_j^2, \ \Sigma_{G\mu} = \Sigma G_j \cdot \mu_j, \alpha_i = \frac{\Sigma_{G\mu}}{\Sigma_{GG}}$$

**26.** Méthode de contrôle du fonctionnement en glissement d'un pneumatique selon la revendication 17, dans laquelle deux coefficients $A_p$ particuliers A et B sont calculés par la régression linéaire suivante appliquée à « n » points de mesure ou d'estimation :

$$A^{Lin} = \frac{n \cdot \Sigma G \cdot \alpha - \Sigma G \cdot \Sigma \alpha}{n \cdot \Sigma G^2 - (\Sigma G)^2}, \ B^{Lin} = \frac{\Sigma \alpha \cdot \Sigma G^2 - \Sigma G \cdot \alpha \cdot \Sigma G}{n \cdot \Sigma G^2 - (\Sigma G)^2}$$

**27.** Méthode de contrôle du fonctionnement en glissement d'un pneumatique selon la revendication 17, dans laquelle deux coefficients $A_p$ particuliers A et B sont calculés par la régression exponentielle suivante appliquée à « n » points de mesure ou d'estimation :

$$A^{Exp} = \frac{n \cdot \Sigma G \cdot Ln(\alpha) - \Sigma G \cdot \Sigma Ln(\alpha)}{n \cdot \Sigma G^2 - (\Sigma G)^2},$$

$$B^{Exp} = \frac{\Sigma Ln(\alpha) \cdot \Sigma G^2 - \Sigma G \cdot Ln(\alpha) \cdot \Sigma G}{n \cdot \Sigma G^2 - (\Sigma G)^2}$$

**28.** Méthode de contrôle du fonctionnement en glissement d'un pneumatique selon la revendication 26, dans laquelle le calcul de $G^{Opt}$ se fait de la façon suivante :

$$G^{Opt} = - \frac{B^{Lin}}{A^{Lin}} \cdot \frac{1 - Invt}{1 - p \cdot Invt},$$

avec $\alpha = A^{Lin} \cdot G + B^{Lin}$

**29.** Méthode de contrôle du fonctionnement en glissement d'un pneumatique selon la revendication 27, dans laquelle le calcul de $G^{Opt}$ se fait de la façon suivante :

$$G^{Opt} = \frac{Ln(Invt)}{p \cdot A^{Exp}},$$

avec $\alpha = e^{A^{Exp} \cdot G + B^{Exp}}$

**30.** Méthode de contrôle du fonctionnement en glissement d'un pneumatique selon la revendication 26, dans laquelle on détermine en outre la valeur de $\mu$ correspondant à $G^{Opt}$ de la façon suivante, où $\mu^{coeff\_lin}$ est un coefficient réglé expérimentalement :

$$\mu = \mu^{Coeff\_lin} \cdot G^{Opt} \cdot (A^{Lin} \cdot G^{Opt} + B^{Lin})$$

**31.** Méthode de contrôle du fonctionnement en glissement d'un pneumatique selon la revendication 27, dans laquelle on détermine en outre $\mu_{max}$ de la façon suivante, où $\mu^{coeff\_exp}$ est un coefficient réglé expérimentalement :

$$\mu_{max} = \mu^{Coeff\_exp} \cdot G^{Opt} \cdot e^{A^{Exp} \cdot G^{Opt} + B^{Exp}}$$

**32.** Méthode de contrôle du fonctionnement d'un pneumatique, comportant une phase de prédiction de la valeur de l'angle de dérive $\delta$ d'un pneumatique où la force latérale est maximale, comprenant les étapes suivantes :

- Déterminer des estimations $(\delta_i, F_i)$ pour au moins une paire « i » de valeurs ;
- Déterminer les valeurs correspondantes de la pente $\alpha_i$, de la droite passant par l'origine et par $(\delta_i, F_i)$ ;
- Calculer des coefficients $A_p$ par calcul direct ou par une régression à partir d'un nombre suffisant de paires avec $(\alpha_i, \delta_i)$ de façon à modéliser une courbe de variation $\alpha_i = f(\delta_i, A_p)$ ;

**33.** Méthode de contrôle du fonctionnement d'un pneumatique selon la revendication 32, comportant en outre les étapes suivantes :

- Calculer une valeur de l'angle de dérive $\delta^{Opt}$ en utilisant un Invariant "Invt" prédéterminé ;
- Etablir un signal d'alerte quand l'angle de dérive $\delta$ est proche de $\delta^{Opt}$.

**34.** Méthode de contrôle du fonctionnement d'un pneumatique selon la revendication 33, dans laquelle on asservit une grandeur permettant d'agir sur l'angle de dérive $\delta$ de façon à le maintenir à $\delta^{Opt}$.

**35.** Méthode de contrôle du fonctionnement d'un pneumatique selon la revendication 33 dans laquelle, en cas d'apparition du signal d'alerte, on agit sur une grandeur de façon à réduire l'angle de dérive $\delta$.

**36.** Méthode de contrôle du fonctionnement d'un pneumatique selon la revendication 33, dans laquelle on détermine l'Invariant de la façon suivante :

$$Invt = \frac{\dfrac{F}{\overline{\delta}}(\delta^{Opt})}{\dfrac{F}{\overline{\delta}}(p.\delta^{Opt})},$$

avec p ayant une valeur positive et inférieure à 1.

**37.** Méthode de contrôle du fonctionnement d'un pneumatique selon la revendication 36, dans laquelle la valeur de p est comprise entre 0.25 et 0.75.

**38.** Méthode de contrôle du fonctionnement d'un pneumatique selon la revendication 37, dans laquelle p vaut 0.5

**39.** Méthode de contrôle du fonctionnement d'un pneumatique selon la revendication 33, dans laquelle la détermination de la pente $\alpha_i$, se fait par calcul direct $\alpha_i = F_i/\delta_i$.

**40.** Méthode d'asservissement de l'angle de dérive $\delta$ d'un pneumatique selon la revendication 33, dans laquelle la détermination de la pente $\alpha_i$, se fait en procédant à une régression adaptée.

**41.** Méthode de contrôle du fonctionnement d'un pneumatique selon la revendication 33, dans laquelle on procède à une régression linéaire :

$$\Sigma_{\delta\delta} = \Sigma\delta_j^2, \Sigma_{\delta F} = \Sigma\delta_j \cdot F_j, \alpha_i = \frac{\Sigma_{\delta F}}{\Sigma_{\delta\delta}}$$

**42.** Méthode de contrôle du fonctionnement d'un pneumatique selon la revendication 33, dans laquelle deux coefficients $A_p$ particuliers A et B sont calculés par la régression linéaire suivante appliquée à « n » points de mesure ou d'estimation :

$$A^{Lin} = \frac{n \cdot \Sigma\delta \cdot \alpha - \Sigma\delta \cdot \Sigma\alpha}{n \cdot \Sigma\delta^2 - (\Sigma\delta)^2}, B^{Lin} = \frac{\Sigma\alpha \cdot \Sigma\delta^2 - \Sigma\delta \cdot \alpha \cdot \Sigma\delta}{n \cdot \Sigma\delta^2 - (\Sigma\delta)^2}$$

**43.** Méthode de contrôle du fonctionnement d'un pneumatique selon la revendication 33, dans laquelle deux coefficients $A_p$ particuliers A et B sont calculés par la régression exponentielle suivante appliquée à « n » points de mesure ou d'estimation :

$$A^{Exp} = \frac{n \cdot \Sigma\delta \cdot Ln(\alpha) - \Sigma\delta \cdot \Sigma Ln(\alpha)}{n \cdot \Sigma\delta^2 - (\Sigma\delta)^2},$$

$$B^{Exp} = \frac{\Sigma Ln(\alpha) \cdot \Sigma\delta^2 - \Sigma\delta \cdot Ln(\alpha) \cdot \Sigma\delta}{n \cdot \Sigma\delta^2 - (\Sigma\delta)^2}$$

**44.** Méthode de contrôle du fonctionnement d'un pneumatique selon la revendication 42, dans laquelle le calcul de $\delta^{Opt}$ se fait de la façon suivante :

$$\delta^{Opt} = -\frac{B^{Lin}}{A^{Lin}} \cdot \frac{1 - Invt}{1 - p \cdot Invt},$$

avec $\alpha = A^{Lin} \cdot \delta + B^{Lin}$

**45.** Méthode de contrôle du fonctionnement d'un pneumatique selon la revendication 43, dans laquelle le calcul de $\delta^{Opt}$ se fait de la façon suivante :

$$\delta^{Opt} = \frac{Ln(Invt)}{p \cdot A^{Exp}},$$

avec $\alpha = e^{A^{Exp} \cdot \delta + B^{Exp}}$

**46.** Méthode de contrôle du fonctionnement d'un pneumatique selon la revendication 42, dans laquelle on détermine en outre $F^{cible}$ de la façon suivante, où $F^{coeff\_lin}$ est un coefficient réglé expérimentalement :

$$F^{Cible} = F^{Coeff\_lin} \cdot \delta^{Opt} \cdot (A^{Lin} \cdot \delta^{Opt} + B^{Lin})$$

**47.** Méthode de contrôle du fonctionnement d'un pneumatique selon la revendication 43, dans laquelle on détermine en outre $F^{cible}$ de la façon suivante, où $F^{coeff\_exp}$ est un coefficient réglé expérimentalement :

$$F^{Cible} = F^{Coeff\_exp} \cdot \delta^{Opt} \cdot e^{A^{Exp} \cdot \delta^{Opt} + B^{Exp}}$$

**48.** Méthode de test en glissement d'un pneumatique comprenant les étapes suivantes :

- Mettre le pneu en roulement sur un sol choisi,
- Appliquer sur le pneu une charge $F_{Z1}$ prédéterminée

- Appliquer au pneu un glissement prédéterminé, tel que le pneu reste en deçà de la limite d'adhérence,
- Mesurer ou estimer l'effort longitudinal du pneumatique $F_{X1}$,
- Calculer une valeur du coefficient d'adhérence $\mu_1 = F_{X1}/F_{Z1}$,
- Reprendre les étapes précédentes pour calculer au moins une autre valeur « i » du coefficient d'adhérence $\mu_i$ pour au moins un autre couple « i » de sollicitations $F_{Xi}/F_{Zi}$ et mesurer le glissement associé $G_i$,
- Déterminer pour chacune des valeurs du coefficient d'adhérence calculées la pente $\alpha_i$ de la droite passant par l'origine et par $(G_i, \mu_i)$,
- Calculer des coefficients $A_p$ par calcul direct ou par une régression appropriée à partir d'un nombre suffisant de paires avec $(\alpha_i, G_i)$ de façon à modéliser une courbe de variation $\alpha_i = f(G_i, A_p)$,
- Calculer un glissement optimal permettant d'atteindre une valeur prédéterminée du coefficient d'adhérence, $G^{Opt}$ en utilisant un Invariant "Invt" prédéterminé.

49. Méthode de test selon la revendication 48, dans laquelle on détermine l'Invariant de la façon suivante :

$$\text{Invt} = \frac{\dfrac{\mu}{G}(G_{max})}{\dfrac{\mu}{G}(p.G_{max})},$$

avec p ayant une valeur positive et inférieure à 1.

50. Méthode de test en dérive d'un pneumatique comprenant les étapes suivantes :

- Mettre le pneu en roulement sur le sol,
- Appliquer sur le pneu une charge $F_{Z1}$ prédéterminée
- Appliquer au pneu un angle de dérive $\delta_i$ prédéterminé, tel que le pneu reste en deçà de la limite d'adhérence, et mesurer ou estimer la poussée de dérive $F_i$ à cet angle de dérive $\delta_i$ ;
- Reprendre les étapes précédentes pour calculer au moins une autre paire « i » de valeurs $(\delta_i, F_i)$ ;
- Déterminer les valeurs correspondantes de la pente $\alpha_i$, de la droite passant par l'origine et par $(\delta_i, F_i)$ ;
- Calculer des coefficients $A_p$ par calcul direct ou par une régression appropriée à partir d'un nombre suffisant de paires $(\alpha_i, \delta_i)$ de façon à modéliser une courbe de variation $\alpha_i = f(\delta_i, A_p)$ ;
- Calculer une valeur de l'angle de dérive $\delta^{Opt}$ en utilisant un Invariant "Invt" prédéterminé ;

51. Méthode de test selon la revendication 50, dans laquelle on détermine l'Invariant de la façon suivante :

$$\text{Invt} = \frac{\dfrac{F}{\delta}(\delta^{Opt})}{\dfrac{F}{\delta}(p.\delta^{Opt})},$$

avec p ayant une valeur positive et inférieure à 1.

52. Méthode de test selon l'une des revendications 48 à 51, dans laquelle on calcule deux coefficients $A_p$ particuliers A et B par une régression choisie dans le groupe constitué par une régression linéaire et une régression exponentielle.

53. Méthode de test selon l'une des revendications 48 ou 50, d'asservissement de l'angle de dérive $\delta$ d'un pneumatique selon la revendication 35, dans laquelle la valeur de p est comprise entre 0.25 et 0.75.

54. Méthode de test selon l'une des revendications 49 ou 51, d'asservissement de l'angle de dérive $\delta$ d'un pneumatique selon la revendication 36, dans laquelle p vaut 0.5

55. Utilisation de l'Invariant «Invt» comme variable d'ajustement dans la mise au point d'une méthode selon l'une quelconque des revendications 1 à 14 et 17 à 54.

56. Méthode d'asservissement du fonctionnement d'un pneumatique dans une configuration donnée, visant à maintenir ledit fonctionnement d'un pneumatique à une valeur prédéterminée du coefficient d'adhérence $\mu$, comprenant les étapes suivantes :

- Déterminer des estimations ou des mesures $(G_i, \mu_i)$ pour une pluralité de couples « i » de valeurs ;
- Calculer une estimation du glissement optimal du pneu $G^{Opt}$ en fonction des caractéristiques physiques intrinsèques dudit pneumatique et de la configuration réelle de fonctionnement existante ;
- Asservir la configuration en fonction de l'écart entre $G_{instantané}$ et $G^{Opt}$.

Mesure $X_i$, $Y_i$

Calcul de la sécante

Calcul de la régression

Prédiction du $X_{Max}$

Régulation autour de $X_{Max}$

Prédiction du $Y_{Max}$

Fig. 1

Fig. 2

Fig. 3

Fig. 4

Fig. 5

Fig. 6

Fig. 7

∝1 pour T=1

∝2 pour T=2

∝3 pour T=3

μ

G

Fig. 8

∝

∝1

∝2

∝3

G

Fig. 9

Fig. 10

Fig. 11

# EP 1 372 049 A1

Office européen
des brevets

**RAPPORT DE RECHERCHE EUROPEENNE**

Numéro de la demande

EP 03 01 2681

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | US 6 285 280 B1 (WANG ORSON SZU-HAN) 4 septembre 2001 (2001-09-04) * colonne 4, ligne 66 - colonne 7, ligne 49 * | 1,15,16, 32 | G05B13/02 |
| A | WO 01 76925 A (DREVOE MARCUS ;AHLQVIST STEFAN (SE); FORSSELL URBAN (SE); PERSSON) 18 octobre 2001 (2001-10-18) * page 10, ligne 13 - page 20, ligne 26 * | 1,15,16, 32 | |
| D,A | WO 92 05986 A (BOSCH GMBH ROBERT) 16 avril 1992 (1992-04-16) | | |
| A | WO 01 87647 A (GUSTAFSSON FREDRIK ;NIRA AUTOMOTIVE AB (SE)) 22 novembre 2001 (2001-11-22) | | |
| A | US 6 092 415 A (BRAUN FRITZ ET AL) 25 juillet 2000 (2000-07-25) * revendication 1 * | 48,50,56 | |
| A | DE 42 18 034 A (PORSCHE AG) 9 décembre 1993 (1993-12-09) * page 6, ligne 17 - page 9, ligne 65 * | 48,50,56 | |

DOMAINES TECHNIQUES RECHERCHES (Int.Cl.7)

G05B
B60C

Le présent rapport a été établi pour toutes les revendications

| Lieu de la recherche | Date d'achèvement de la recherche | Examinateur |
|---|---|---|
| LA HAYE | 6 octobre 2003 | Kelperis, K |

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 03 01 2681

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

06-10-2003

| Document brevet cité au rapport de recherche | | Date de publication | Membre(s) de la famille de brevet(s) | | Date de publication |
|---|---|---|---|---|---|
| US 6285280 | B1 | 04-09-2001 | DE | 10130127 A1 | 03-01-2002 |
| | | | JP | 2002059724 A | 26-02-2002 |
| WO 0176925 | A | 18-10-2001 | AU | 4897601 A | 26-11-2001 |
| | | | AU | 5071501 A | 23-10-2001 |
| | | | EP | 1272365 A1 | 08-01-2003 |
| | | | EP | 1274613 A1 | 15-01-2003 |
| | | | SE | 0002212 A | 13-12-2001 |
| | | | WO | 0176925 A1 | 18-10-2001 |
| | | | WO | 0187647 A1 | 22-11-2001 |
| | | | US | 2003172728 A1 | 18-09-2003 |
| WO 9205986 | A | 16-04-1992 | DE | 4030724 A1 | 02-04-1992 |
| | | | DE | 59102640 D1 | 29-09-1994 |
| | | | WO | 9205986 A2 | 16-04-1992 |
| | | | EP | 0503025 A1 | 16-09-1992 |
| | | | JP | 5502423 T | 28-04-1993 |
| | | | JP | 3437571 B2 | 18-08-2003 |
| | | | JP | 2003081079 A | 19-03-2003 |
| WO 0187647 | A | 22-11-2001 | AU | 4897601 A | 26-11-2001 |
| | | | AU | 5071501 A | 23-10-2001 |
| | | | EP | 1272365 A1 | 08-01-2003 |
| | | | EP | 1274613 A1 | 15-01-2003 |
| | | | SE | 0002212 A | 13-12-2001 |
| | | | WO | 0176925 A1 | 18-10-2001 |
| | | | WO | 0187647 A1 | 22-11-2001 |
| | | | US | 2003172728 A1 | 18-09-2003 |
| US 6092415 | A | 25-07-2000 | DE | 19807880 A1 | 09-09-1999 |
| | | | EP | 0938987 A2 | 01-09-1999 |
| DE 4218034 | A | 09-12-1993 | DE | 4218034 A1 | 09-12-1993 |

EPO FORM P0460

Pour tout renseignement concernant cette annexe : voir Journal Officiel de l'Office européen des brevets, No.12/82